# EUROPEAN PATENT SPECIFICATION

(11) **EP 3 680 847 B1**
(45) Date of publication and mention of the grant of the patent: **25.02.2026**
(21) Application number: 17924155.9
(22) Date of filing: 18.12.2017
(51) Int. Cl.: A01C 23/00, C02F 1/461, C02F 3/00, C02F 3/32, C02F 103/32, A01G 25/16, A01G 31/06, G06N 3/02, G06Q 50/02, G06Q 50/06, H02N 11/00, H02S 10/10, H02S 10/30, H02S 40/30, A01C 23/04, A01G 9/24

(54) **SALINITY GRADIENT POWER GENERATION-BASED ENERGY-INDEPENDENT SMART FARM SYSTEM**
ENERGIEUNABHÄNGIGES INTELLIGENTES LANDWIRTSCHAFTSSYSTEM AUF DER BASIS VON SALINITÄTSGRADIENT-ENERGIEERZEUGUNG
SYSTÈME DE FERME INTELLIGENTE AUTOSUFFISANTE EN ÉNERGIE, BASÉE SUR LA PRODUCTION D'ÉNERGIE À GRADIENT DE SALINITÉ

(30) Priority: 05.09.2017 KR 20170113323; 11.12.2017 KR 20170169430; 15.12.2017 KR 20170172902
(43) Date of publication of application: 15.07.2020
(73) Proprietor: Korea Institute of Energy Research, Daejeon 34129 (KR)
(72) Inventor: JEONG, Namjo, Jeju-si Jeju-do 63101 (KR); KIM, Han Ki, Jeju-si Jeju-do 63226 (KR); HWANG, Kyo Sik, Jeju-si Jeju-do 63301 (KR); YANG, Seung Cheol, Jeju-si Jeju-do (KR); NAM, Joo-Youn, Jeju-si Jeju-do (KR); CHOI, Ji Yeon, Jeju-si Jeju-do (KR); HAN, Ji Hyung, Jeju-si Jeju-do 63303 (KR); JWA, Eun-Jin, Jeju-si Jeju-do 63336 (KR); PARK, Soon-Chul, Jeju-si Jeju-do 63357 (KR); JANG, Moon-Seok, Daejeon 35284 (KR); KO, Hee-sang, Jeju-si Jeju-do 63284 (KR); LEE, Gwang-Se, Jeju-si Jeju-do 63357 (KR); SEO, Yong Seok, Daejeon 34120 (KR)
(74) Representative: AWA Sweden AB
(86) International application number: PCT/KR2017/014929
(87) International publication number: WO 2019/050099

(56) References cited:
- JP-A- 2009 050 174
- JP-A- 2012 041 849
- KR-A- 20120 052 469
- KR-A- 20150 005 859
- KR-A- 20160 025 656
- US-A1- 2012 292 187

## Description

### [Technical Field]

The present invention relates to a smart farm system, and more particularly, to a salinity gradient power generation-based energy-independent smart farm system.

### [Background Art]

The water-energy-food nexus means integrated management technology to grasp the connection between water, energy, and food resources and use resources efficiently. A smart farm that is the center of the water-energy-food nexus is agricultural ICT convergence technology to improve productivity and quality of crops by maintaining optical environmental conditions and controlling nutrient solution based on real-time sensing information on the environment of a greenhouse and a crop growth state. The smart farm in a broader sense includes the agricultural form, which applies the ICT convergence technology to the entire cycle of agricultural and livestock production, distribution, and consumption in the agricultural and livestock industries, such as bare ground agriculture, hydroponics, facility horticulture, and livestock farming, and improves the quality of life in rural areas through the application of the ICT convergence technology.

Due to the nature of the smart farm, which consumes a lot of energy for operating and managing the facility, in order to secure efficiency of the entire system, the energy supply of the smart farm needs to be independent and stable, and the supply of a growth raw material needs to be environmentally friendly. Accordingly, there is a need for developing the energy-independent smart farm system. JP 2009 05017 4 A relates to an automatic operation controlling system for plant cultivation greenhouse. KR 2016 0025656 A relates to an independent power providing apparatus based on a salinity difference. And US 2012/292187 A1 relates to a reverse electrodialysis supported microbial fuel cells and microbial electrolysis cells.

### [Disclosure]

### [Technical Problem]

The present invention has been made in an effort to provide a salinity gradient power generation-based energy-independent smart farm system, which is capable of customizing and providing energy required for operating and managing a smart farm and an optimized growth raw material according to the types of crops by using salinity gradient power generation.

### [Technical Solution]

The invention is defined by the appended claims.

An exemplary embodiment of the present invention provides a smart farm system, including: a farm facility in which crops are cultivated; and a salinity gradient power generator which receives a high-concentration solution including at least one selected from the group consisting of filtered waste water, food waste acid fermentation liquid, carbon dioxide absorption liquid, and filtration liquefied fertilizer and a low-concentration solution having a lower concentration than a concentration of the high-concentration solution and generates electricity by using a concentration difference between the high-concentration solution and the low-concentration solution, and supplies a growth raw material used in growing the crops.

Another exemplary embodiment of the present invention provides a smart farm system, including: a farm facility in which crops are cultivated; a salinity gradient power generator which receives a high-concentration solution including at least one selected from the group consisting of filtered waste water, food waste acid fermentation liquid, carbon dioxide absorption liquid, filtration liquefied fertilizer, and fertilizer liquid and a low-concentration solution having a lower concentration than a concentration of the high-concentration solution and generates electricity by using a concentration difference between the high-concentration solution and the low-concentration solution, and supplies a growth raw material used in growing the crops; a large-capacity salinity gradient power generator which receives any one of high-concentration salt water and the high-concentration solution and the low-concentration solution and generates electricity; and an energy storage system which stores electricity generated in the salinity gradient power generator and the large-capacity salinity gradient power generator, and supplies the electricity to the farm facility.

### [Advantageous Effects]

According to the present invention, the smart farm system may simultaneously generate electricity by using a concentration difference between fresh water and waste resources or a fertilizer solution and supply a growth raw material of a concentration appropriate to the growth of crops. Accordingly, the smart farm system may realize energy independence and efficiently help the growth of crops, thereby solving a water-energy-food nexus problem. Accordingly, the smart farm system may be applied to a smart farm franchise business, an eco-friendly city, an anti-aging functionalized city, a large-scale eco-friendly water-energy-waste independent smart city, and the like.

### [Description of the Drawings]

FIG. 1 is a diagram illustrating a smart farm system according to a first exemplary embodiment of the present invention.
FIGS. 2 to 4 are diagrams of modified examples of the smart farm system illustrated in FIG. 1.
FIG. 5 is a diagram illustrating a smart farm system according to a second exemplary embodiment of the present invention.
FIG. 6 is a diagram illustrating a smart farm system according to a third exemplary embodiment of the present invention.
FIG. 7 is a diagram illustrating a smart farm system according to a fourth exemplary embodiment of the present invention.
FIGS. 8 and 9 are a perspective view and a lateral view of the first exemplary embodiment of a salinity gradient solar energy complex power generator.
FIG. 10 is an exploded perspective view and a rear view for describing a first solution inlet and a first inflow member of the first exemplary embodiment of the salinity gradient solar energy complex power generator.
FIG. 11 is an exploded perspective view of the first exemplary embodiment of the salinity gradient solar energy complex power generator.
FIGS. 12 and 13 are a perspective view and a schematic view for describing a salinity gradient power generating unit of the salinity gradient solar energy complex power generator.
FIGS. 14 and 15 are a perspective view and a lateral view of a second exemplary embodiment of a salinity gradient solar energy complex power generator.
FIG. 16 is an exploded perspective view of the second exemplary embodiment of the salinity gradient solar energy complex power generator.
FIG. 17 is a graph illustrating an energy density according to a change in temperatures of freshwater and salt water solutions of a salinity gradient power generator through the salinity gradient solar energy complex power generator in the smart farm system illustrated in FIG. 7.
FIGS. 18 and 19 are a perspective view and a lateral view of a salinity gradient solar energy complex power generator according to a third exemplary embodiment of the present invention.
FIGS. 20 to 22 are perspective views for describing the salinity gradient solar energy complex power generating system according to the exemplary embodiment of the present invention.
FIG. 23 is a diagram illustrating a combined system in which the smart farm systems according to the first to fourth exemplary embodiments of the present invention are combined.
FIG. 24 is a graph illustrating an energy density of the salinity gradient power generator according to the type and composition of chemical fertilizer components in the smart farm system illustrated in FIG. 1.
FIG. 25 is a graph illustrating an Open Circuit Voltage (OCV) of the salinity gradient power generator in the smart farm system illustrated in FIG. 1.
FIG. 26 is a graph illustrating a change in an energy density according to a change in a freshwater flow rate of the salinity gradient power generator using the chemical fertilizer components in the smart farm system illustrated in FIG. 1.
FIG. 27 is a graph illustrating an energy density of the salinity gradient power generator using a waste coffee solution as a fertilizer solution and using freshwater as fresh water in the smart farm system illustrated in FIG. 1.
FIG. 28 is a graph illustrating an energy density of the salinity gradient power generator using KNO₃ as a fertilizer solution and using a waste coffee solution as fresh water in the smart farm system illustrated in FIG. 1.
FIG. 29 is a graph illustrating an energy density of the salinity gradient power generator using a liquefied fertilizer obtained from pig excreta as a fertilizer solution and using freshwater as fresh water in the smart farm system illustrated in FIG. 1 or 6.
FIG. 30 is a graph illustrating a change in a concentration of carbon dioxide absorption liquid of the salinity gradient power generator using carbon dioxide absorption liquid as a fertilizer solution and using freshwater as fresh water in the smart farm system illustrated in FIG. 1.
FIG. 31 is a graph illustrating a change in a concentration of fresh water solution of the salinity gradient power generator using carbon dioxide absorption liquid as a fertilizer solution and using freshwater as fresh water in the smart farm system illustrated in FIG. 1.

### [Mode for Invention]

The present invention will be described more fully hereinafter with reference to the accompanying drawings, in which exemplary embodiments of the invention are shown.

Constituent elements which are not separately mentioned in relation to a solar cell panel and a salinity gradient power generator (a reverse electrodialysis power generator) may be appropriately selected and used by those skilled in the art according to a use purpose and condition if they have been used in the art. Further, throughout the present specification, "connect, install, and mount" mean fixedly connecting by using bolts, nuts, and the like, and those skilled in the art may appropriately select and use a connection member as well as the bolt and the nut.

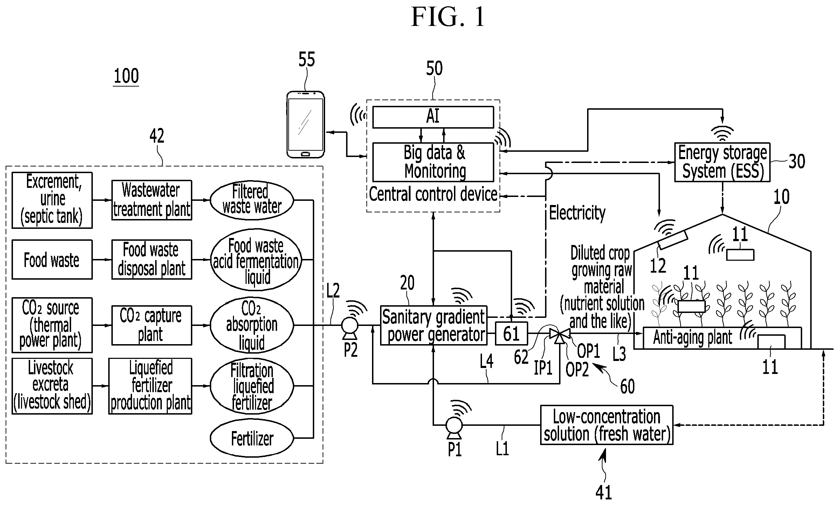

FIG. 1 is a diagram illustrating an energy-independent smart farm system according to an exemplary embodiment of the present invention.

Referring to FIG. 1, the smart farm system 100 of the first exemplary embodiment includes a farm facility 10 in which crops are grown, a salinity gradient power generator 20 which generates power by using a low-concentration solution and a high-concentration solution, an energy storage system 30 which stores electricity, and a central control device 50.

The salinity gradient power generator 20 is connected with a low-concentration solution supply unit 41 and a high-concentration solution supply unit 42, and is controlled by the central control device 50.

The farm facility 10 may be a general open farm facility or a building, such as a greenhouse. The farm facility 10 includes at least one of various sensors 11, which detect temperature, humidity, light quantity, wind direction, wind speed, plant growth, and the like, and includes an electromechanical device 12 which is capable of operating and communicating with the farm facility 10.

The sensors 11 may include a sensor which is attached to the soil or hydroponic cultivation solution to detect humidity, temperature, pH, the level of nutrition, and the like, a sensor for detecting a light quantity inside a greenhouse, a sensor which is attached to crops to monitor growth of crops, and the like.

The electromechanical device 12 may include an air conditioner for controlling temperature, an exhaust fan for ventilation, a machine for controlling water, a light device for supplying light, equipment capable of communicating with the central control device, and the like.

The low-concentration solution (fresh water) supply unit 41 may include a first pipe L1 for transferring a low-concentration solution (0.005 to 1.0 wt%) obtained from a fresh water source, and a first pump P1 installed in the first pipe L1. The fresh water source may include at least one selected from general fresh water, ground water, tap water, sewage discharge water, river water, general agricultural water, washing water, cooling water, and mixed solutions thereof, but is not limited thereto.

The high-concentration solution supply unit 42 may include a second pipe L2 for transferring a high-concentration solution (1.0 to 50.0 wt%), and a second pump P2 installed in the second pipe L2.

The high-concentration solution may be at least one selected from the group consisting of filtered wastewater, food waste acid fermentation liquid, carbon dioxide absorption liquid, filtration liquefied fertilizer, and fertilizer liquid, and may be a high-concentration solution, not sea water.

The filtration liquefied fertilizer may be a filtrate of a waste coffee extract, sesame dreg fermented liquid, green tobacco liquefied fertilizer, fermented liquid using thinned fruits, green tobacco sesame dreg liquefied fertilizer, molasses liquefied fertilizer, raw rice wine liquefied fertilizer, fermented liquefied fertilizer, herbal liquefied fertilizer, calcium liquefied fertilizer using egg shell, kimchi liquefied fertilizer, milk liquefied fertilizer, microbial liquefied fertilizer, fish liquefied fertilizer, animal husbandry excreta liquefied fertilizer, and other organic liquefied fertilizers.

The fertilizer liquid is liquid of a general chemical fertilizer, and may include at least one of UREA, NH₄NO₃, NH₄Cl, Ca(NO₃)₂, NH₄H₂PO₄, NaNO₃, KNO₃, (NH₄)₂SO₄, KH₂PO₄, (NH₄)₂HPO₄, K₂SO₄, and KCl.

The salinity gradient power generator 20 is connected with the first and second pipes L1 and L2 to receive the low-concentration solution and the high-concentration solution, generates electricity by using a concentration difference between the low-concentration solution and the high-concentration solution, and discharges a growth raw material (diluted nutrient solution or carbonated water) and supplies the discharged growth raw material to the crops of the farm facility 10. Particularly, the growth raw material may be supplied to soil or hydroponic cultivation solution of the farm facility 10 and supplied to the crops.

The salinity gradient power generator 20 may be a Reverse ElectroDialysis (RED) device. The RED device includes a cell stack in which a cation exchange membrane and an anion exchange membrane are alternately arranged, and electrodes (an oxidation electrode and a reduction electrode) disposed at both ends of the cell stack. When the high-concentration solution and the low-concentration solution are supplied to the cell stack, a potential difference is generated while the anions move to the anion exchange membrane side and the cations move to the cation exchange membrane side, and power is generated while electrons flow by an oxidation-reduction reaction in the electrode. **In** order to generate the flow of the electrons in the electrode, in addition to the oxidation-reduction reaction, a capacitive ion desorption and adsorption method may also be used. In general, in the RED method, in principle, the degree of contamination on the surface of the separation membrane is low, so that it is possible to reduce cost for pretreatment energy for the high-concentration solution and the low-concentration solution used for the salinity gradient power generation, compared to the pressure retarded osmosis method in which electricity is generated while water moves through the separation membrane. Therefore, the RED method has an advantage in the aspects of long-term stability and energy efficiency of the salinity gradient power generation.

The electricity generated in the salinity gradient power generator 20 is all stored in the energy storage unit 30, or may be divided and supplied to the energy storage unit 30, the farm facility 10, and the central control device 50. The energy storage unit 30 stores the electricity generated in the salinity gradient power generator 20, and supplies the stored electricity to the sensor 11, the electromechanical device 12, and the central control device 50. The salinity gradient power generator 20 may generate the sufficient amount of electricity required for operating the farm facility 10 by the large concentration difference between the low-concentration solution and the high-concentration solution.

The central control device 50 is electrically connected with the sensor 11, the electromechanical device 12, and the salinity gradient power generator 20, and controls the driving of the salinity gradient power generator 20 according to a detection signal of the sensor 11 by a preset program. Particularly, the central control device 50 may precisely control flow rates of the low-concentration solution and the high-concentration solution supplied to the salinity gradient power generator 20 by controlling the operations of the first pump P1 and the second pump P2, or may also turn on/off the operation itself of the salinity gradient power generator 20. Further, the central control device may also wirelessly receive big data obtained from various sensors. Further, the central control device 50 may be the artificial intelligence-based central control device which analyzes big data of a growth environment based on artificial intelligence and applies the analyzed big data to the control again. Further, the central control device 50 may communicate the analyzed and monitored data with a portable control device 55 of a user.

The high-concentration solution may be the high-enriched solution of which a concentration belongs to the range of 1 wt% to 50 wt%. Accordingly, even the growth raw material discharged in the state where the concentration is lowered through the salinity gradient power generator 20 may have the high concentration to be directly supplied to crops. In this case, the crop growth raw material needs to be diluted and supplied to crops. The growth raw material diluting and supplying unit 60 may include a third pipe P3 connected to the salinity gradient power generator 20 and the farm facility 10, a concentration measuring device 61 and a three-way valve 62 installed in the third pipe L3, a fourth pipe L4 connected to a second outlet OP2 of the three-way valve 62 and the second pipe L2.

The three-way valve 62 includes an inlet IP through which the growth raw material solution is introduced, a first outlet OP1 heading the farm facility 10, and the second outlet OP2 connected to the fourth pipe L4. Any one of the first outlet OP1 and the second outlet OP2 of the three-way valve 62 is opened according to a measurement result of the concentration measuring device 61 to control a supply direction of the diluted crop growth raw material solution.

For example, an optimum concentration range is preset in the central control device 50 for each crop, and the concentration measuring device 61 may measure a concentration of the crop growth raw material flowing in the third pipe L3 and output the measurement signal to the central control device 50.

The central control device 50 may compare the measurement signal with the set range, and when the measurement signal satisfies the set range, the central control device 50 may control the growth raw material to be supplied to crops by opening the first outlet OP1 of the three-way valve 62. In the meantime, when the measurement signal does not satisfy the set range, the central control device 50 may transfer the growth raw material to the second pipe L2 by opening the second outlet OP2 of the three-way valve 62. The growth raw material transferred to the second pipe L2 is mixed with the high-concentration solution and supplied to the salinity gradient power generator 20 again.

The conventional salinity gradient power generator 20 uses fresh water and sea water as the raw material of the salinity gradient power generation, but there is a limit in that the salinity gradient power generator 20 needs to be adjacent to seashore in order to supply sea water. Further, the large amount of NaCl salt contained in sea water may damage crops, so that the use of NaCl salt may be considerably limited. In the meantime, according to the first exemplary embodiment of the present invention, various fertilizers and wastes around the farm facility 10 or the raw material obtained from the wastes are used, so that there is no limit in the installation location of the farm facility.

Particularly, the salinity gradient power generator 20 may use waste resources, such as filtered wastewater obtained from a septic tank around the farm facility 10, food waste acid fermentation liquid obtained from a food waste disposal plant, carbon dioxide absorption liquid obtained from a carbon dioxide capture plant that absorbs carbon dioxide discharged from combusted exhaust gas of a combustion exhaust facility, and a filtration liquefied fertilizer obtained from excreta of a shed, or fertilizer easily available in the surroundings, instead of sea water, and use fresh water obtained from groundwater, tap water, sewage effluent, river water, reservoirs, and other agricultural water to convert the waste resources or the fertilizer to energy through the salinity gradient power generator 20 and simultaneously produce the growth raw material used in the plant growth.

Accordingly, the smart farm system 100 may realize energy independence by utilizing evasion and disgust facilities, efficiently control the growth of the crops, and complete a virtuous circle structure of waste. That is, the smart farm system 100 may simultaneously solve the environmental and energy problems to be applied to a smart farm franchise business, an eco-friendly city, an anti-aging functionalized city, a large-scale eco-friendly water-energy-waste independent smart city, a large-scale eco-friendly water-energy-food independent smart city, and the like.

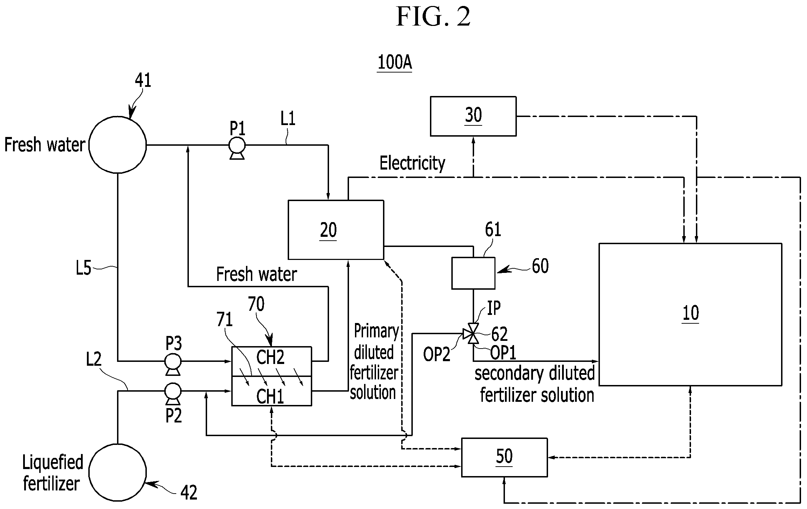

FIGS. 2 to 4 illustrate various modified examples of the smart farm system according to the first exemplary embodiment of the present invention.

For the simple illustration of the drawing, the farm facility 10, the energy storage unit 30, the central control device 50, and the farm facility 10 are illustrated in the form of a black box and the illustration of a wireless communication signal is omitted. Further, the high-concentration solution 42 will be described based on a liquefied fertilizer as an example.

Referring to FIG. 2, a first modified example 100A further includes a forward osmosis unit 70 located at a front end of the salinity gradient power generator 20 in addition to the configuration of the first exemplary embodiment as a basis. The forward osmosis unit 70 includes a first flow channel CH1 and a second flow channel CH2 separated by a semitransmitting film 71.

The low-concentration solution (fresh water) supply unit 41 may include a first pipe L1 for transferring fresh water obtained from a fresh water source to the salinity gradient power generator 20, a first pump P1 installed in the first pipe L1, a fifth pipe L5 for supplying fresh water obtained from the fresh water source to the second flow channel CH2 of the forward osmosis unit 70, and a third pump P3 installed in in the fifth pipe L5.

The liquefied fertilizer supply unit 42 may include a second pipe L2 for supplying the liquefied fertilizer to the first channel CH1 of the forward osmosis unit 70, and a second pump P2 installed in the second pipe L2.

When the liquefied fertilizer is supplied to the first flow channel CH1 of the forward osmosis unit 70 and fresh water is supplied to the second channel CH2, water contained in the fresh water passes through the semitransmitting film 71 by osmotic pressure of the liquefied fertilizer and the fresh water and moves to the first flow channel CH1. As a result, a primary diluted fertilizer solution is discharged to an outlet of the first flow channel CH1 and the fresh water is discharged to an outlet of the second flow channel CH2.

The primary diluted fertilizer solution discharged from the first flow channel CH1 is supplied to the salinity gradient power generator 20, and the fresh water discharged from the second flow channel CH2 is transferred to the first pipe L1 and is supplied to the salinity gradient power generator 20 again. The salinity gradient power generator 20 generates electricity by using a concentration difference between the fresh water and the primary diluted fertilizer solution, and discharges a secondary diluted fertilizer solution and supplies the secondary diluted fertilizer solution to the crops.

The concentration measuring device 61 measures a concentration of the secondary diluted fertilizer solution, and when the measured concentration satisfies a set range, the first outlet OP1 of the three-way valve 62 is opened and the secondary diluted fertilizer solution is supplied to the crops. By contrast, when the measured concentration does not satisfy the set range, the second outlet OP2 of the three-way valve 62 is opened, and the secondary diluted fertilizer solution is transferred to the second pipe L2, is mixed with the liquefied fertilizer, and then is supplied to the forward osmosis unit 70 again.

The central control device 50 controls the sensor unit 11, the salinity gradient power generator 20, and the forward osmosis unit 70, and controls the driving of the salinity gradient power generator 20 and the forward osmosis unit 70 according to the detection signal of the sensor unit 11 by a preset program.

Particularly, the central control device 50 may be electrically connected with the first pump to the third pump P1, P2, and P3. The central control device 50 may precisely control the flow rates of the liquefied fertilizer and the fresh water supplied to the forward osmosis unit 70 by controlling the operations of the second pump P2 and the third pump P3. Further, the central control device 50 may precisely control the flow rate of the fresh water supplied to the salinity gradient power generator 20 by controlling the operation of the first pump P1 according to the flow rate of the primary diluted fertilizer solution discharged from the first flow channel CH1 of the forward osmosis unit 70.

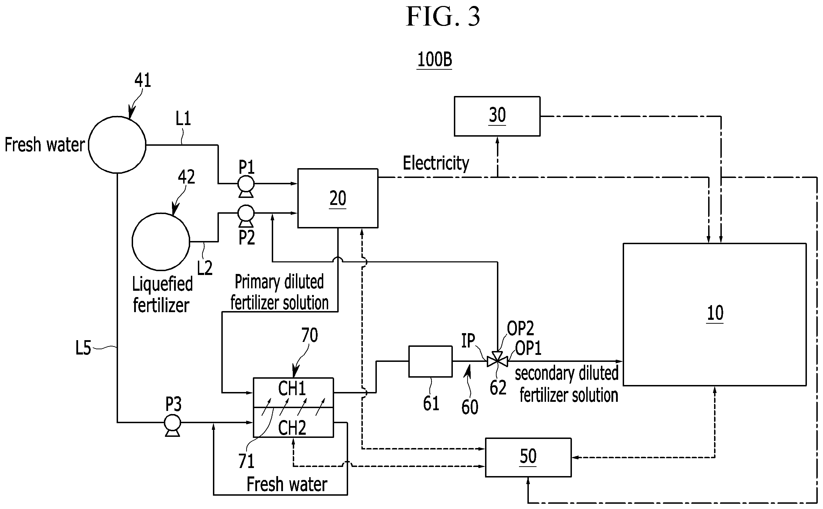

Referring to FIG. 3, a second modified example 100B includes the similar configuration as that of the first modified example 100A (see FIG. 2) except that the forward osmosis unit 70 is located at a rear end of the salinity gradient power generator 20. The forward osmosis unit 70 includes a first flow channel CH1 and a second flow channel CH2 separated by a semitransmitting film 71.

The low-concentration solution (fresh water) supply unit 41 may include a first pipe L1 for transferring fresh water obtained from a fresh water source to the salinity gradient power generator 20, a first pump P1 installed in the first pipe L1, a fifth pipe L5 for supplying fresh water obtained from the fresh water source to the second flow channel CH2 of the forward osmosis unit 70, and a third pump P3 installed in in the fifth pipe L5.

A liquefied fertilizer supply unit 42 may include a second pipe L2 supplying a liquefied fertilizer to the salinity gradient power generator 20, and a second pump P2 installed in the second pipe L2.

The salinity gradient power generator 20 generates electricity by using a concentration difference between fresh water and the liquefied fertilizer, and discharges a primary diluted fertilizer solution and supplies the primary diluted fertilizer solution to the first flow channel CH1 of the forward osmosis unit 70. In the forward osmosis unit 70, water contained in fresh water passes through a semitransmitting film 71 by osmotic pressure of the primary diluted fertilizer solution and fresh water and moves to the first flow channel CH1. As a result, a secondary diluted fertilizer solution is discharged to an outlet of the first flow channel CH1 and the fresh water is discharged to an outlet of the second flow channel CH2.

The secondary diluted fertilizer solution discharged from the first flow channel CH1 is supplied to crops of a farm facility, and the fresh water discharged from the second flow channel CH2 is transferred to a fifth pipe L5 and is supplied to the forward osmosis unit 70 again.

The concentration measuring device 61 measures a concentration of the secondary diluted fertilizer solution, and when the measured concentration satisfies a set range, the first outlet OP1 of the three-way valve 62 is opened and the secondary diluted fertilizer solution is supplied to the crops. By contrast, when the measured concentration does not satisfy the set range, the second outlet OP2 of the three-way valve 62 is opened, and the secondary diluted fertilizer solution is transferred to the second pipe L2, is mixed with the liquefied fertilizer, and then is supplied to the salinity gradient power generator 20 again.

The central control device 50 controls the sensor unit 11, the salinity gradient power generator 20, and the forward osmosis unit 70, and controls the driving of the salinity gradient power generator 20 and the forward osmosis unit 70 according to the detection signal of the sensor unit 11 by a preset program.

Particularly, the central control device 50 may precisely control the flow rates of the fresh water and the liquefied fertilizer supplied to the salinity gradient power generator 20 by controlling the operations of the first pump P1 and the second pump P2. Further, the central control device 50 may precisely control the flow rate of the fresh water supplied to the forward osmosis unit 70 by controlling the operation of the third pump P3 according to the flow rate of the primary diluted fertilizer solution discharged from the salinity gradient power generator 20.

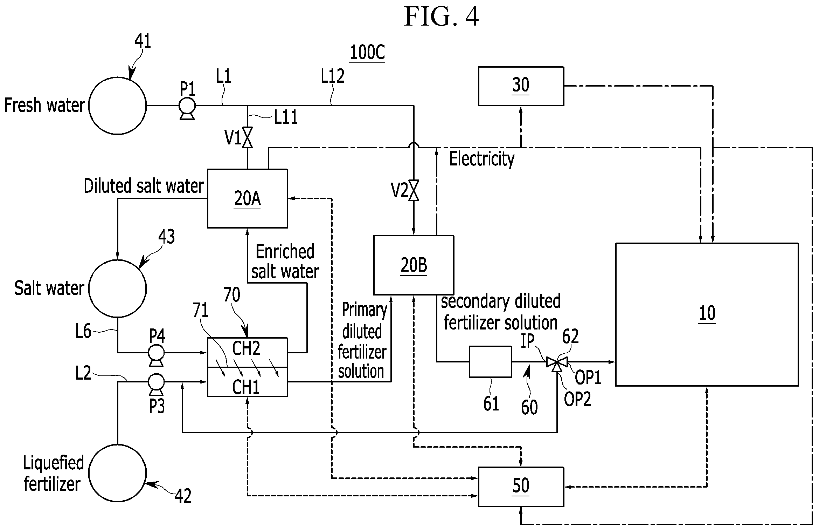

Referring to FIG. 4, a third modified example 100C includes two salinity gradient power generators 20A and 20B in addition to the configuration of the first exemplary embodiment as a basis, and further includes a salt water supply unit 43 and a forward osmosis unit 70. The two salinity gradient power generators 20A and 20B includes a first salinity gradient power generator20A and a second salinity gradient power generator 20B.

The salt water supply unit 43 may include a sixth pipe L6 for transferring salt water obtained from a salt water source, and a fourth pump P4 installed in the sixth pipe L6. The salt water source may include at least one of industrial waste salt water, seawater, and artificial salt water. A concentration of salt water is higher than a concentration of fresh water and is lower than a concentration of a liquefied fertilizer. The concentration of salt water may belong to the range of approximately 2 wt% to 7 wt%.

The forward osmosis unit 70 includes a first flow channel CH1 and a second flow channel CH2 separated by a semitransmitting film 71. The second pipe L2 of the liquefied fertilizer supply unit 42 is connected to the first flow channel CH1 of the forward osmosis unit 70, and the sixth pipe L6 of the salt water supply unit 43 is connected to the second flow channel CH2 of the forward osmosis unit 70.

When the liquefied fertilizer is supplied to the first flow channel CH1 of the forward osmosis unit 70 and salt water is supplied to the second channel CH2, water contained in the salt water passes through the semitransmitting film 71 and moves to the first flow channel CH1 by osmotic pressure of the liquefied fertilizer and the salt water. As a result, a primary diluted fertilizer solution is discharged to an outlet of the first flow channel CH1 and enriched salt water is discharged to an outlet of the second flow channel CH2.

A lower-concentration solution (fresh water) supply unit 41 may include a first pipe L1 connected to a fresh water source, a first branched pipe L11 and a second branched pipe L12 branched from the first pipe L1, a first pump P1 installed in the first pipe L1, a first valve V1 installed in the first branched pipe L11, and a second valve V2 installed in the second branched pipe L12. The first branched pipe L11 is connected to the first salinity gradient power generator 20A and the second branched pipe L12 is connected to the second salinity gradient power generator 20B.

The configuration of the low-concentration solution (fresh water) supply unit 41 is not limited to the foregoing example, and any configuration which is capable of dividing and supplying fresh water to the first and second salinity gradient power generators 20A and 20B is applicable.

The first salinity gradient power generator 20A receives fresh water from the first pipe L1 and the first branched pipe L11, receives the enriched salt water discharged from the forward osmosis unit 70, and generates electricity by a concentration difference between the fresh water and the enriched salt water. The first salinity gradient power generator 20A may discharge diluted salt water, and the diluted salt water may be supplied to the salt water source again.

The second salinity gradient power generator 20B receives fresh water from the first pipe L1 and the second branched pipe L12, receives the primary diluted fertilizer solution discharged from the forward osmosis unit 70, and generates electricity by a concentration difference between the fresh water and the primary diluted fertilizer solution. The second salinity gradient power generator 20B discharges a secondary diluted fertilizer solution, and the secondary diluted fertilizer solution is supplied to crops of the farm facility 10.

The concentration measuring device 61 measures a concentration of the secondary diluted fertilizer solution, and when the measured concentration satisfies a set range, the first outlet OP1 of the three-way valve 62 is opened and the secondary diluted fertilizer solution is supplied to the crops. By contrast, when the measured concentration does not satisfy the set range, the second outlet OP2 of the three-way valve 62 is opened, and the secondary diluted fertilizer solution is transferred to the second pipe L2, is mixed with the liquefied fertilizer, and then is supplied to the forward osmosis unit 70 again.

The energy storage unit 30 stores the electricity generated in the first and second salinity gradient power generators 20A and 20B, and supplies the stored electricity to the sensor unit 11, the electromechanical device 12, and the central control device 50. The central control device 50 is electrically connected to the sensor unit 11, the forward osmosis unit 70 and the first and second salinity gradient power generators 20A and 20B, and controls the driving of the first and second salinity gradient power generators 20A and 20B and the forward osmosis unit 70 according to the detection signal of the sensor unit 11 by the preset program.

Particularly, the central control device 50 may precisely control the flow rates of the liquefied fertilizer and the salt water supplied to the forward osmosis unit 70 by controlling the operations of the second pump P2 and the fourth pump P4.

The central control device 50 may precisely control the flow rate of the fresh water supplied to the first salinity gradient power generator 20A by controlling the operations of the first pump P1 and the first valve V1 according to the flow rate of the enriched salt water discharged from the forward osmosis unit 70. Further, the central control device 50 may precisely control the flow rate of the fresh water supplied to the second salinity gradient power generator 20B by controlling the operations of the first pump P1 and the second valve V2 according to the flow rate of the primary diluted fertilizer solution discharged from the forward osmosis unit 70.

The third modified example 100C may adjust the concentration of the fertilizer solution supplied to the crops by using the forward osmosis unit 70 and the second salinity gradient power generator 20B, and realize the energy independence of the farm facility by using the first and second salinity gradient power generators 20A and 20B.

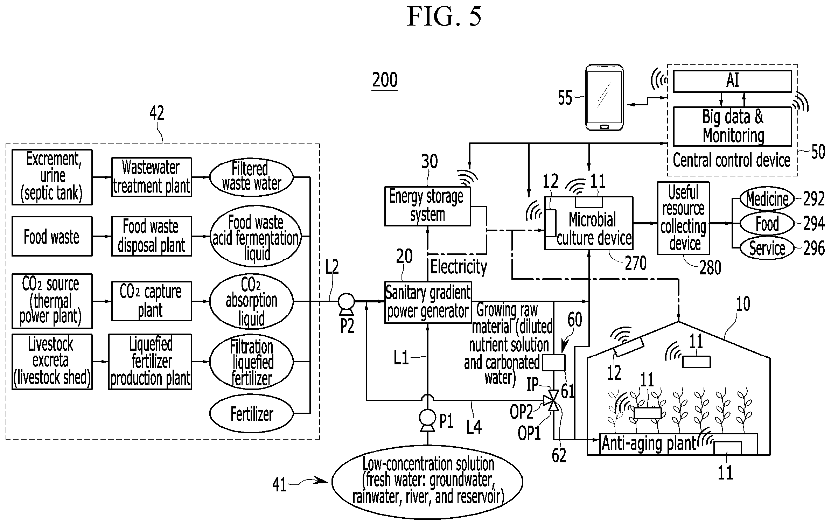

FIG. 5 is a diagram illustrating a smart farm management system according to a second exemplary embodiment of the present invention.

Referring to FIG. 5, a smart farm system 200 according to a second exemplary embodiment includes a farm facility 10 in which crops are cultivated, a salinity gradient power generator 20 for generating electricity by using a low-concentration solution (fresh water) and a high-concentration solution, an energy storage system 30 for storing electricity, a central control device 50, a microbial culture device 270 in which microbial culture is performed, and a useful resource collecting device 280 for collecting useful resources from the microbial culture device 270.

The farm facility 10 may be a general open farm facility or a building, such as a greenhouse. The farm facility 10 includes at least one of various sensors 11, which detect temperature, humidity, light quantity, wind direction, wind speed, plant growth, and the like, and includes an electromechanical device 12 which is capable of operating and communicating with the farm facility 10.

Sensors 11 in the farm facility may include a sensor which is attached to the soil or hydroponic cultivation solution to detect humidity, temperature, pH, the level of nutrition, and the like, a sensor for detecting a light quantity inside a greenhouse, a sensor which is attached to crops to monitor growth of crops, and the like.

A sensor 211 in the microbial culture device 270 may be a temperature sensor disposed inside the microbial culture device 270 to measure an internal temperature, a pH sensor for measuring pH of a microalgae culture tank, a DO sensor, a turbidity sensor, an optical sensor for measuring the amount of light of the microalgae culture tank, a PO₄³⁻-P sensor, an NH₃-N sensor, an NO₃⁻-N sensor, and sensors for detecting humidity, temperature, pH, the concentration of nutrient, the amount of light, the concentration of carbonated water, and the like.

The electromechanical device 12 within the farm facility 10 may include an air conditioner for controlling temperature, an exhaust fan for ventilation, a machine for controlling water, a light device capable of supplying light, equipment capable of communicating with the central control device, and the like.

An electromechanical device 212 within the microbial culture device 270 may include a supply valve for supplying microorganisms (for example, microalgae) within the microbial culture device 270, an influent supply valve for supplying influent, a compressor for circulating influent and effluent, a boiler or a heater for adjusting a temperature inside the microalgae culture tank, and a stirrer for stirring the microalgae culture tank.

The low-concentration solution (fresh water) supply unit 41 may include a first pipe L1 for transferring a low-concentration solution obtained from a fresh water source, and a first pump P1 installed in the first pipe L1. The fresh water source may include at least one of ground water, tap water, sewage discharge water, river water, reservoir water, and other agricultural water.

The high-concentration solution supply unit 42 may include a second pipe L2 for transferring a high-concentration solution, and a second pump P2 installed in the second pipe L2.

The high-concentration solution may be at least one selected from the group consisting of filtered waste water, food waste acid fermentation liquid, carbon dioxide absorption liquid, filtration liquefied fertilizer, and fertilizer liquid, and may be a high-concentration solution, not sea water.,

The filtration liquefied fertilizer may be a filtrate of a waste coffee extract, sesame dreg fermented liquid, green tobacco liquefied fertilizer, fermented liquid using thinned fruits, green tobacco sesame dreg liquefied fertilizer, molasses liquefied fertilizer, raw rice wine liquefied fertilizer, fermented liquefied fertilizer, herbal liquefied fertilizer, calcium liquefied fertilizer using egg shell, kimchi liquefied fertilizer, milk liquefied fertilizer, microbial liquefied fertilizer, fish liquefied fertilizer, animal husbandry excreta liquefied fertilizer, and other organic liquefied fertilizers.

The fertilizer liquid is general chemical fertilizer liquid, and may include at least one of UREA, NH₄NO₃, NH₄Cl, Ca(NO₃)₂, NH₄H₂PO₄, NaNO₃, KNO₃, (NH₄)₂SO₄, KH₂PO₄, (NH₄)₂HPO₄, K₂SO₄, and KCl.

The salinity gradient power generator 20 is connected with the first and second pipes L1 and L2 to receive the low-concentration solution and the high-concentration solution, generates electricity by using a concentration difference between the low-concentration solution and the high-concentration solution, and discharges a growth raw material (diluted nutrient solution or carbonated water) and supplies the discharged growth raw material to the crops of the farm facility 10 and the microbial culture device 270.

Particularly, when carbon dioxide absorption liquid is supplied as a high-concentration solution, the salinity gradient power generator 20 may supply carbonated water to the microbial culture device 270 as a carbon source by controlling a solution that meets a concentration under a condition appropriate to the cultivation of the microorganism between the discharged water of the high-concentration solution and the discharged water of the enriched low-concentration solution diluted while increasing the amount of electricity generated.

For example, in the case where a microorganism is the blue-green algae, the blue-green algae is the absolute photoautotrophs, and when only a small amount of microelements exists, the blue-green algae may fix nitrogen gas in the air and produce the large amount of bioenergy materials (biomass) in a short time by using carbonated water as a carbon source.

The salinity gradient power generator 20 may be a Reverse ElectroDialysis (RED) device. The RED device includes a cell stack in which a cation exchange membrane and an anion exchange membrane are alternately arranged, and electrodes (an oxidation electrode and a reduction electrode) disposed at both ends of the cell stack. When the high-concentration solution and the low-concentration solution are supplied to the cell stack, a potential difference is generated while the anions move to the anion exchange membrane side and the cations move to the cation exchange membrane side, and power is generated while electrons flow by an oxidation-reduction reaction in the electrode. In order to generate the flow of the electrons in the electrode, in addition to the oxidation-reduction reaction, a capacitive ion desorption and adsorption method may also be used. In general, in the RED method, in principle, the degree of contamination on the surface of the separation membrane is low, so that it is possible to reduce cost for pretreatment energy for the high-concentration solution and the low-concentration solution used for the salinity gradient power generation, compared to the pressure retarded osmosis method in which electricity is generated while water moves through the separation membrane. Therefore, the RED method has an advantage in the aspects of long-term stability and energy efficiency of the salinity gradient power generation.

The electricity generated in the salinity gradient power generator 20 is all stored in the energy storage unit 30, or may be divided and supplied to the energy storage unit 30, the farm facility 10, the microbial culture device 270, and the central control device 50. The energy storage unit 30 stores the electricity generated in the salinity gradient power generator 20, and supplies the stored electricity to the sensors 11 and 211, the electromechanical device 212, the microbial culture device 270, and the central control device 50. The salinity gradient power generator 20 may generate the sufficient amount of electricity required for operating the farm facility 10 and the microbial culture device 270 by the large concentration difference between the low-concentration solution and the high-concentration solution.

The central control device 50 is electrically connected with the sensors 11 and 211, the electromechanical devices 12 and 212, and the salinity gradient power generator 20, and controls the driving of the salinity gradient power generator 20 according to a detection signal of the sensors 11 and 211 by a preset program. Particularly, the central control device 50 may precisely control flow rates of the low-concentration solution and the high-concentration solution supplied to the salinity gradient power generator 20 by controlling the operations of the first pump P1 and the second pump P2, or may also turn on/off the operation itself of the salinity gradient power generator 20. Further, the central control device may also wirelessly receive big data obtained from various sensors. Further, the central control device 50 may be the artificial intelligence-based central control device which analyzes big data of a growth environment based on artificial intelligence and applies the analyzed big data to the control again. Further, the central control device 50 may communicate the analyzed and monitored data with a portable control device 55 of a user.

The high-concentration solution may be the high-enriched solution of which a concentration belongs to the range of 1 wt% to 50 wt%. Accordingly, even the growth raw material discharged in the state where the concentration is lowered through the salinity gradient power generator 20 may have the high concentration to be directly supplied to crops or microorganisms. In this case, the growth raw material needs to be diluted and supplied to crops. A growth raw material diluting and supplying unit 60 may include a third pipe L3 connected to the salinity gradient power generator 20 and the farm facility 10, a concentration measuring device 61 and a three-way valve 62 installed in the third pipe L3, and a fourth pipe L4 connected to a second outlet OP2 of the three-way valve 62 and the second pipe L2.

The three-way valve 62 includes an inlet IP through which the growth raw material solution is introduced, a first outlet OP1 heading the farm facility 10, and the second outlet OP2 connected to the fourth pipe L4. Any one of the first outlet OP1 and the second outlet OP2 of the three-way valve 62 is opened according to a measurement result of the concentration measuring device 61 to control a supply direction of the growth raw material solution.

For example, an optimum concentration range is preset in the central control device 50 for each crop or microorganism, and the concentration measuring device 61 may measure a concentration of the growth raw material flowing in the third pipe L3 and output the measurement signal to the central control device 50.

The central control device 50 may compare the measurement signal with the set range, and when the measurement signal satisfies the set range, the central control device 50 may control the growth raw material to be supplied to crops or microorganisms by opening the first outlet OP1 of the three-way valve 62. In the meantime, when the measurement signal does not satisfy the set range, the central control device 50 may transfer the growth raw material to the second pipe L2 by opening the second outlet OP2 of the three-way valve 62. The growth raw material transferred to the second pipe L2 is mixed with the high-concentration solution and supplied to the salinity gradient power generator 20 again.

In the meantime, in the operation of cultivating the large amount of microorganisms in the microbial culture device 270, the temperature of the microbial culture device 270, the concentration of carbonated water, and the concentrations of other nutrients are transferred to the central control device 50 through the sensor 211. The artificial intelligence-based central control device 50 may analyze growth environment big data transferred from the sensor 11, analyze an optimum environment and an optimum operating condition, and then control the electromechanical device 212 that is the operating system of the microbial culture device based on the analysis result to maintain an optimum condition of the microbial culture while consuming minimum energy.

Then, when the amount of microorganisms produced in the microbial culture device 270 is sensed through the sensor 211 and then the result is transmitted to the central control device 50, the central control device 50 determines whether the amount of microorganisms exceeds a predetermined value. When the amount of microorganisms exceeds a predetermined value, the central control device 50 controls a drainage valve device among the electromechanical devices 212 to be opened and moves a microorganism culture solution to the useful resource collecting device 280. The useful resource collecting device 280 is the device for collecting only the microorganisms in the microorganism culture solution, and may rake the microorganism floating in the culture or use a filtering scheme, and the process may be automatically performed. The collected microorganisms may be finally processed as useful resources through the bio-refinery technology. The useful resource may be used for medicines 292, food 294, and other various services 296 (services, such as hair care, skin care, and appearance improvement) using microorganisms.

That is, the useful resource collecting device 280 may simultaneously supply the nutrient required for growing the microorganisms (microalgae) and collect the energy by utilizing the salinity gradient power generation by the RED device. That is, the system may autonomously supply energy required for driving the sensor required for monitoring the growth environment of the microorganisms (microalgae) and the like. The energy supply of the foregoing scheme enables the microorganism (microalgae) growing system to be operated by distributed power, saves troubles of connecting to a separate power grid, and enables the mass production of the microorganism (microalgae) by maintaining an optimum condition by organically adjusting the microorganism (microalgae) growing system. It is possible to mass-produce new anti-aging drugs or health supplements by using the microorganism (microalgae) produced by the foregoing scheme. As a result, economic production is possible by producing expensive useful resources by using waste resources.

Similar to the first exemplary embodiment, it is possible to simultaneously convert waste resources to energy by utilizing the salinity gradient power generator formed of the RED device and produce the growth raw material used for growing the crops and the microorganisms.

The smart farm system 200 may realize energy independence by utilizing evasion and disgust facilities, efficiently control the growth of the crops and the microorganisms, and complete a virtuous circle structure of waste. That is, the smart farm system 200 may simultaneously solve the environmental and energy problems to be applied to a smart farm franchise business, an eco-friendly city, an anti-aging functionalized city, a large-scale eco-friendly water-energy-waste independent smart city, a large-scale eco-friendly water-energy-food independent smart city, and the like.

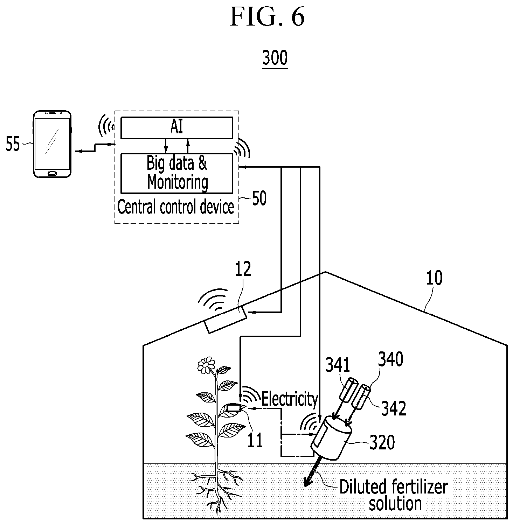

FIG. 6 is a diagram illustrating a smart farm system according to a third exemplary embodiment of the present invention.

Referring to FIG. 6, a smart farm system 300 according to a third exemplary embodiment includes a power generation/communication integrated salinity gradient power generator 320 for monitoring growth of crops in real time in a farm facility 10.

When fresh water 341 contained in a capsule 340 and at least one selected from the group consisting of filtered waste water, food waste acid fermentation liquid, carbon dioxide absorption liquid, filtration liquefied fertilizer, and fertilizer liquid are introduced to the independent salinity gradient power generator 320, power is generated and the growth raw material is produced in the salinity gradient power generator 320 at the same time. Particularly, when the filtration liquefied fertilizer or the fertilizer liquid is used, the diluted fertilizer solution is generated.

Electricity generated in the independent salinity gradient power generator 320 is transferred to the sensor 11 installed in each crop and a sensor 311 installed in the salinity gradient power generator 320. The sensor 11 installed in the crop is the sensor for monitoring the growth state (physiological activity, physiological disorder, and the like) for each individual crop in real time, and the sensor 311 installed in the salinity gradient power generator 320 is the sensor for monitoring the environment (temperature, humidity, carbon dioxide concentration, solar radiation quantity, water temperature, pH, and the like) in the farm facility 10 in real time.

When the information collected in the crop sensor 11 is transmitted to the artificial intelligence-based central control device 50 through the wired/wireless communication, the central control device 50 may accurately predict and control the growth status, yield, and harvest time of the cultivated crops and the like through the big data-based analysis, and the central control device 50 analyzes the environment information collected from the sensor installed in the salinity gradient power generator 320, controls the electromechanical device 12 installed in the farm facility 10 based on the analyzed environment information, and operates the environment in the farm facility 10 in a state optimized to the growth of the crops.

Then, all of the information transmitted to the central control device 50 is transmitted to a mobile terminal 55, so that a user may check the information at any time.

The diluted fertilizer produced in the independent salinity gradient power generator 320 may be automatically supplied according to osmotic pressure of soil or the hydroponic cultivation soultion.

According to the smart farm system according to the third exemplary embodiment, the sensors 11 and 211 of the plant growth monitoring system may be operated by using the salinity gradient power generator 320 as the independent power sources without being connected to external power sources. Accordingly, the smart farm system may be effectively applied to a large farm and the like.

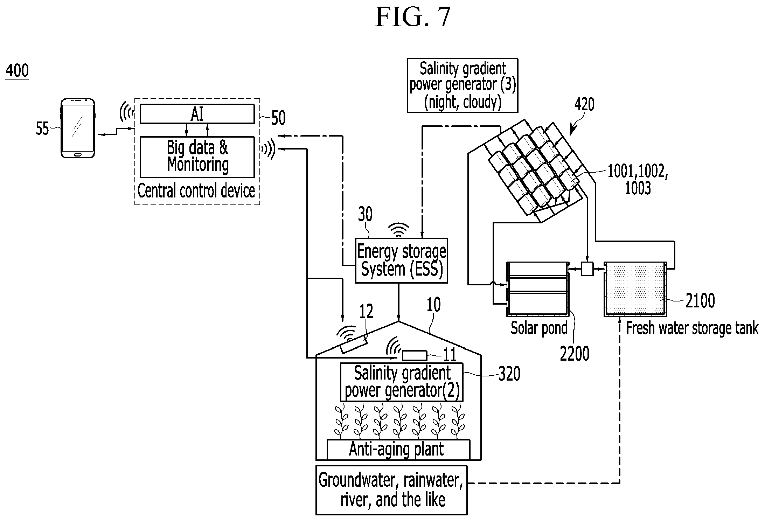

FIG. 7 is a diagram illustrating a smart farm system according to a fourth exemplary embodiment of the present invention. Referring to FIG. 7, a smart farm system 400 according to a fourth exemplary embodiment includes a farm facility 10 in which crops are cultivated, a large-capacity salinity gradient solar energy complex power generating system 420, an energy storage system 30 for storing electricity, and a central control device 50.

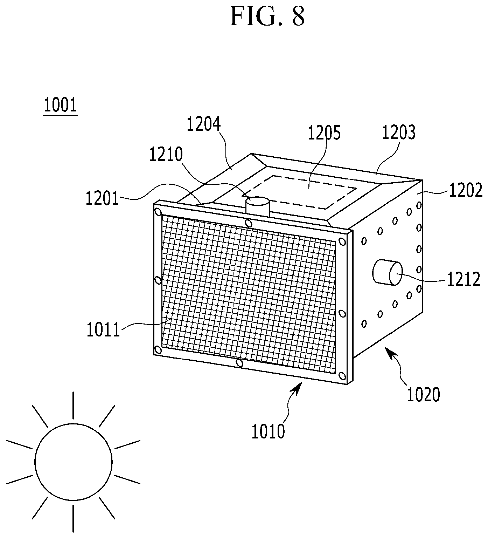

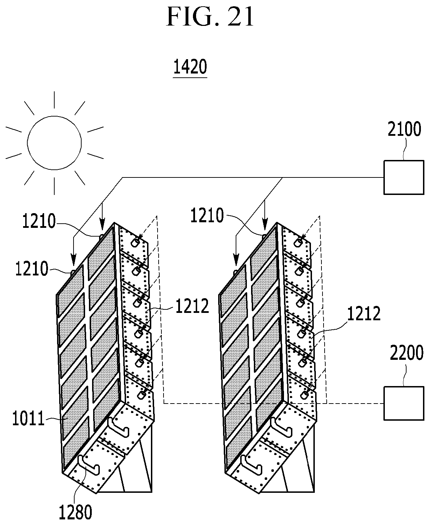

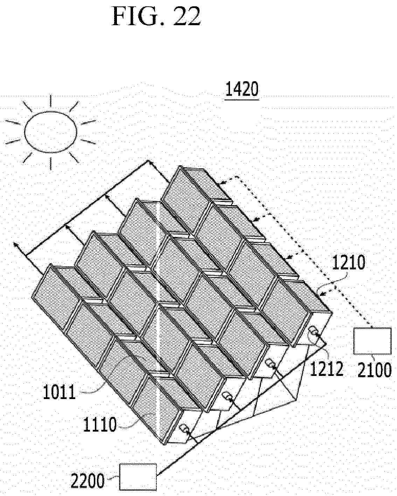

The large-capacity salinity gradient solar cell complex power generating system 420 includes a large-capacity salinity gradient solar energy complex power generator 1001, 1002, or 1003, a first solution supply source 2100 and a second solution supply source 2200. The large-capacity salinity gradient solar energy complex power generator 1001, 1002, or 1003 will be described in detail with reference to FIGS. 8 to 22. The first solution supply source 2100 may be fresh water, and the second solution supply source 2200 may be a high-concentration salt water layer (about 80°C, 30 wt% saturated convection layer) that is a bottom layer of a solar pond. However, these are merely the representative examples of the supply source, the second solution supply source 2200 may include at least one selected from filtered waste water, food waste acid fermentation liquid, carbon dioxide absorption liquid (1.3 to 50.0 wt%), filtration liquefied fertilizer, and fertilizer solution (1.0 to 50.0 wt%), salt water (7.0 wt% or more), and a mixed solution thereof, that are the high-concentration solution used in the first and second exemplary embodiments.

The discharged solution with the lowered concentration in the large-capacity salinity gradient solar energy complex power generator 1001, 1002, or 1003 is transferred to the first solution supply source 2100 again and the discharged solution with the increased concentration in the large-capacity salinity gradient solar energy complex power generator 1001, 1002, or 1003 is transferred to an intermediate layer (a layer divided over a depth of about 1 m to a density of 23 wt% that is a saturation state and having a non-convection characteristic) of the solar pond that is the second solution supply source 2200.

The large-capacity salinity gradient solar energy complex power generator 1001, 1002, or 1003 relates to the salinity gradient solar energy complex power generator capable of performing solar light and solar heat power generation and salinity gradient power generation at the same time, which generates electric energy by using solar light power generation and supplies hot water generated during the generation of electric energy to the RED device and more efficiently generates electrochemical potential energy generated during the operation of the RED device, that is, smoothly generates separation and movement of ions, thereby improving the generation of electricity.

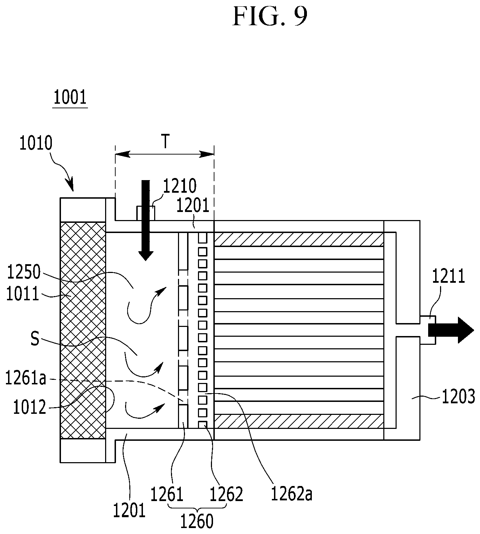

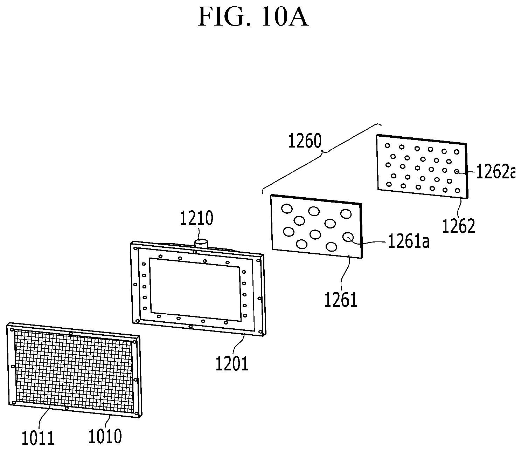

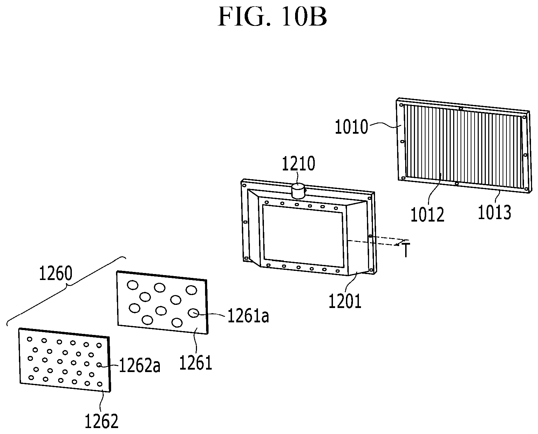

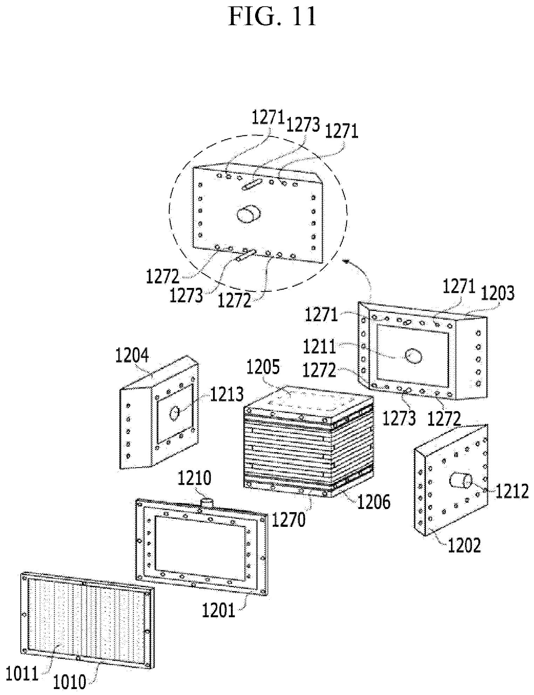

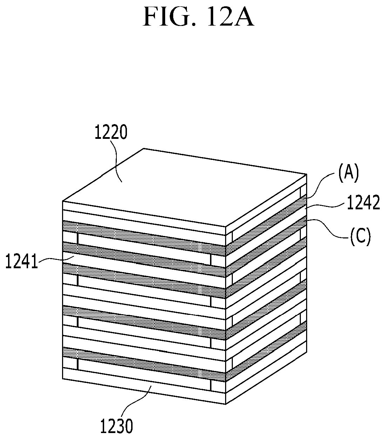

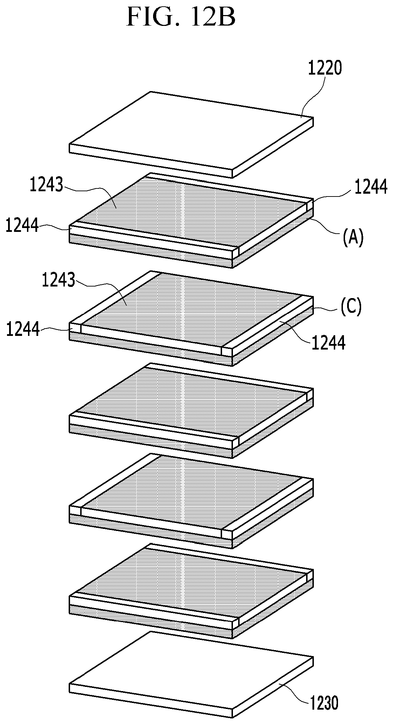

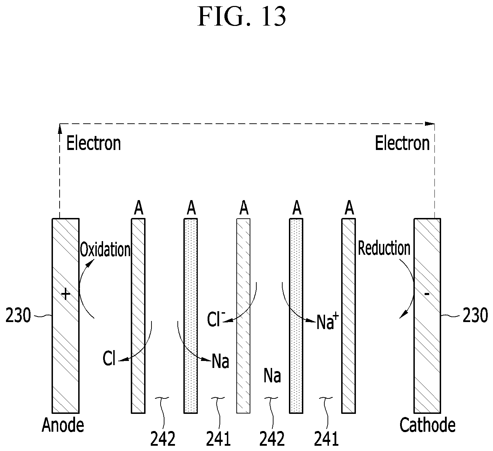

FIGS. 8 and 9 are a perspective view and a lateral view of the first exemplary embodiment of the salinity gradient solar energy complex power generator, FIG. 10 is an exploded perspective view and a rear view for describing the first solution inlet and the first inflow member of the first exemplary embodiment of the salinity gradient solar energy complex power generator, FIG. 11 is an exploded view of the first exemplary embodiment of the salinity gradient solar energy complex power generator, and FIGS. 12 and 13 are a perspective view and a schematic view for describing a salinity gradient power generating unit.

As illustrated in FIGS. 8 to 13, the first exemplary embodiment 1001 of the salinity gradient solar energy complex power generator includes a solar cell panel 1010 and a salinity gradient power generation unit 1020.

The solar cell panel 1010 includes a first surface 1011 including a light receiving unit and a second surface 1012 in a direction opposite to the first surface 1011. Herein, the light receiving unit of the first surface 1011 means a region in which the solar cell panel is capable of receiving light and generating electricity.

Particularly, referring to (b) of FIG. 10, at least a partial region of the second surface 1012 may additionally include a heat radiating member 1013. The heat radiating member 1013 may be formed in a structure to have a large heat radiating area in order to improve heat radiating efficiency, and for example, the heat radiating member 1013 may have a fin or a heat five structure formed to protrude from the second surface 1012, but is not limited thereto.

Further, a first solution and a second solution are introduced to the salinity gradient power generating unit 1020, and the salinity gradient power generating unit 1020 may generate electricity through salinity gradient power generation. The first and second solutions are supplied from the first solution supply source 2100 (see FIG. 7) and the second solution supply source 2200 (see FIG. 7), respectively.

More particularly, referring to FIGS. 11 to 13, the salinity gradient power generating unit 1020 includes a housing 1200 including a first solution inlet port 1210, a first solution outlet port 1211, a second solution inlet port 1212, and a second solution outlet port 1213. The housing 1200 is disposed in the housing, and includes an anode electrode 1220 and a cathode electrode 1230, which are provided to be spaced apart from each other at a predetermined interval, and a plurality of ion exchange membranes 1240 arranged between the anode electrode 1220 and the cathode electrode 1230.

The plurality of ion exchange membranes 1240 may be arranged to divide a first flow channel 1241 in which the first solution flows and a second flow channel 1242 in which the second solution flows between the anode and cathode electrodes 1220 and 1230.

Herein, the plurality of ion exchange membranes 1240 includes cation exchange membranes C and anion exchange membranes A, and the cation exchange membranes C and the anion exchange membranes A may be alternately disposed. Accordingly, the plurality of first flow channels 1241 and the plurality of second flow channels 1242 may be formed inside the housing 1200 in which the plurality of ion exchange membranes is arranged.

More particularly, the housing 1200 of the salinity gradient power generating unit 1020 according to the first exemplary embodiment of the present invention includes the first to fourth frames 1201, 1202, 1203, and 1204 in which the first solution inlet port 1210, the second solution inlet port 1212, the first solution outlet port 1211, the second solution outlet port 1213 are provided, respectively.

Further, the housing 1200 includes fifth and sixth frames 1205 and 1206 provided so as to surround the anode and cathode electrodes 1220 and 1230, respectively.

Referring to FIG. 11, the housing 1200 may be formed, for example, in a hexahedron, and the first to fourth frames 1201, 1202, 1203, and 1204 may be formed in a lateral surface of the housing 1200, and the fifth and sixth frames 1205 and 1206 may be formed in an upper surface and a lower surface of the housing 1200, respectively.

More particularly, the first frame 1201 may include the first solution inlet port 1210. Further, the second frame 1202 may include the second solution inlet port 1212. Further, the third frame may include the first solution outlet port 1211. Further, the fourth frame 1204 may include the second solution outlet port 1213. Herein, the first to sixth frames are connected with one another to form the housing 1200.

Further, the fifth and sixth frames may additionally include sealing gaskets 1270 provided so as to prevent the first and second solutions flowing through the first and second flow channels 241 and 242 provided between the fifth and sixth frames 1205 and 1206 from being discharged, respectively.

Further, the third frame 1203 may additionally include an electrolyte inlet port 1271 and an electrolyte outlet port 1272 for supplying and discharging an electrode solution, that is, an electrolyte, to the anode and cathode electrodes 1220 and 1230.

Herein, an electrolyte supply source (not illustrated) for supplying the electrolyte may be additionally included.

Further, the third frame 1203 may additionally include electrode bars 1273 as collectors of electricity generated in the anode and cathode electrodes 1220 and 1230.

Accordingly, the electrode bars 1273 may be provided at an upper end and a lower end of the third frame 1203 so as to be connected to the anode and cathode electrodes 1220 and 1230, respectively.

Particularly, the electrode bar 1273 is formed to protrude outside the third frame 1230 to supply the generated electricity to the outside.

In the meantime, referring to FIG. 9, the housing 1200 includes a first solution inlet 1250 which connects the first solution inlet port 1210 and the first flow channel 1241 so that a fluid is movable.

Further, the first solution inlet 1250 may be provided so that heat is exchanged between the introduced first solution and the second surface 1012 of the solar cell panel.

More particularly, in the first solution inlet 1250 of the present invention, at least one surface forming a space S to which the first solution is introduced may be the second surface 1012 of the solar cell panel 1010.

The first frame 1201 including the second surface 1012 of the solar cell panel 1010 and the first solution inlet port 1210 may be provided to be connected to each other so as to form the space S to which the first solution is introduced.

Particularly, the first frame 1201 may be connected to meet an edge circumferential area of the second surface 1012, and may be formed to have a predetermined thickness T so as to form the space S to which the first solution is introduced.

Accordingly, when the first solution is introduced to the first solution inlet 1250, the first solution may be in contact with the second surface 1012 of the solar cell panel.

That is, when the first solution is introduced to the first solution inlet 1250 through the first solution inlet port 1210, the first solution is in contact with the second surface 1012.

The second surface 1012 of the solar cell panel is in a state where a temperature is increased by light received by the light receiving unit of the first surface 1011 of the solar cell panel, so that the solar cell panel 1010 is cooled through the heat exchange with the introduced first solution as described above, thereby achieving an effect of improving performance of the solar cell panel 1010.

Accordingly, the temperature of the introduced first solution as described above is increased by the second surface 1012 of the solar cell panel.

The first solution having a higher temperature than the temperature of the initially introduced first solution may be introduced to the first flow channel 1241.

Convection of the first solution may be incurred in the first solution inlet 1250 by a temperature difference between the first solution and the second surface 1012 by the foregoing contact.

In the meantime, the salinity gradient power generating unit 1020 of the present invention additionally includes a first inflow member 1260 which is provided to distribute the first solution introduced to the first solution inlet 1250 to the first flow channel 1241 and simultaneously uniformly distribute the first solution to all of the plurality of ion exchange membranes 1240 while preventing the first solution from being introduced to the second flow channel 1242.

More particularly, the first inflow member 1260 may be provided between the first solution inlet 1250 and the plurality of ion exchange membranes 1240.

The first inflow member 1260 may have a plurality of holes having a predetermined size formed so that the first solution passes through the plurality of holes and is introduced to the first flow channel.

For example, the first inflow member 1260 may be a perforated plate, but is not limited thereto.

Particularly, the first inflow member 1260 includes a first perforated plate 1261 having a plurality of first holes 1261a and a second perforated plate 1262 having a plurality of second holes 1262a having a smaller size than that of the first hole 1261a.

That is, the first hole 1261a is larger than the second hole 1262a.

Based on the first solution inlet 1250, the first perforated plate 1261 and the second perforated plate 1262 may be sequentially disposed.

As described above, the first solution passes through the larger first hole 1261a and then passes through the smaller second hole 1262a, so that the first solution may be more efficiently and rapidly and uniformly introduced to the first flow channel 1241.

Herein, the first inflow member 1260 includes the first perforated plate and the second perforated plate as described above, but is not limited thereto, and it should be understood that the first inflow member 1260 may include only the first perforated plate, and may additionally include a third perforated plate.

In the meantime, electricity may be generated while an ionic material included in the second solution selectively moves the plurality of ion exchange membranes 1240 by the salinity gradient between the first solution and the second solution flowing through the first flow channel 1241 and the second flow channel 1242 of the present invention.

More particularly, referring to FIG. 13, when the first solution introduced from the first solution inlet 1250 and the second solution introduced through the second solution inlet port 1213 flow through the first and second flow channels 1241 and 1242, respectively, the ionic material, that is, a cationic material and an anionic material, included in the second solution having a higher salt concentration than that of the first solution selectively passes through a cation exchange membrane C and an anion exchange membrane A, so that a potential difference is generated, an oxidation reaction and a reduction reaction are generated in the anode electrode 1220 and the cathode electrode 1230, respectively, and a flow of electrons is generated to generate electricity.

For example, the cationic material may be sodium ion (Na+) and the anionic material may be chlorine ion (Cl-), but the cationic material and the anionic material are not limited thereto.

Referring to (b) of FIG. 12, the plurality of ion exchange membranes 1240 may additionally include spacers 1243 and gaskets 1244 for forming the first flow channel 1241 and the second flow channel 1242.

The spacers 1243 and the gaskets 1244 may be provided in the plurality of cation exchange membranes C and the plurality of anion exchange membranes A, respectively.

As illustrated in (a) of FIG. 12, the cation exchange membranes C and the anion exchange membranes A including the spacers 1243 and the gaskets 1244, respectively, are arranged while being alternately and sequentially stacked between the anode and cathode electrodes 1220 and 1230 formed at both terminal ends, so that the first flow channel 1241 and the second flow channel 1242 may be formed.

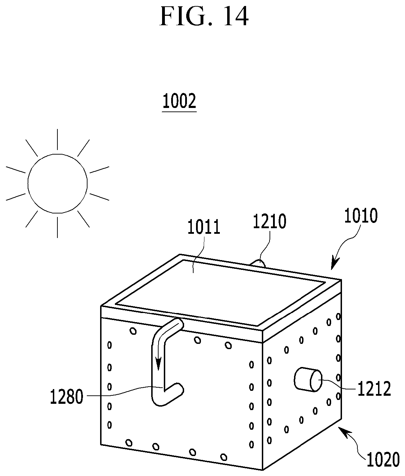

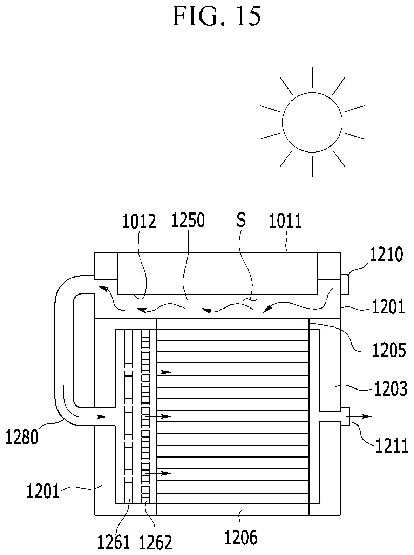

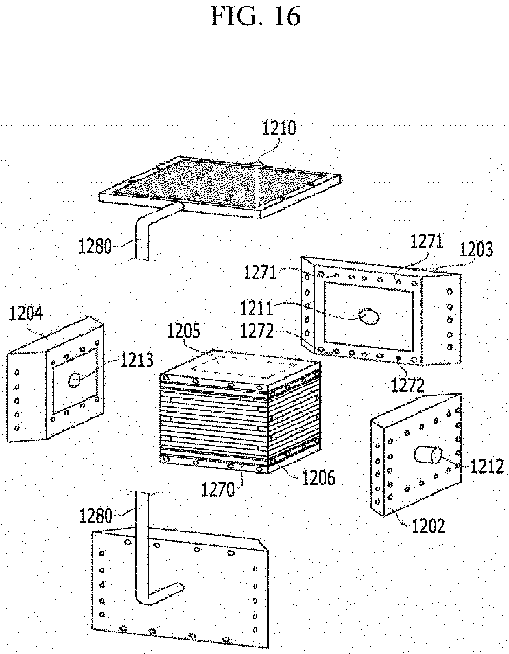

FIGS. 14 and 15 are a perspective view and a lateral view of a second exemplary embodiment of a salinity gradient solar energy complex power generator, and FIG. 16 is an exploded perspective view of the second exemplary embodiment of the salinity gradient solar energy complex power generator.

Referring to FIGS. 14 and 15, the second exemplary embodiment 1002 of the salinity gradient solar energy compoex power generator may additionally include a first connection flow channel 1280 which connects the first solution inlet 1250 and the first inflow member 1260 so that a fluid is movable, in order for the first solution to be transmitted to the first flow channel.

More particularly, as described above, the first solution introduced to the first solution inlet 1250 may have an increased temperature after being in contact with the second surface of the solar cell panel 1010 and be introduced to the first flow channel 1241 through the first connection flow channel 1280.

As illustrated in FIG. 16, when the first solution inlet 1250 includes the first connection flow channel 1280, the first inlet 1250 may be connected to be in contact with the fifth frame 1205.

Accordingly, the first frame 1201 may be connected to be in contact with one lateral surface of each of the second to fourth frames 1202, 1203, and 1204.

A process of generating electricity by using the first or second exemplary embodiment 1001 or 1002 of the salinity gradient solar energy complex power generator will be described below with reference to FIGS. 8 to 16.

First, as illustrated in FIGS. 8 and 14, when solar light is incident to the first surface 1011 including the light receiving unit of the solar cell panel 1010, electricity is generated by the incident solar light.

In this case, electricity is generated and a temperature of the first surface 1011 is increased by the solar light incident to the first surface 1011 at the same time, and a temperature of the second surface 1012 is increased by conduction according to the increase in the temperature.

The first solution introduced to the first solution inlet 1250 through the first solution inlet port 1210 is in contact with the second surface 1012 of which the temperature is increased as described above, and a temperature of the contact first solution is increased.

That is, the solar cell panel 1010 is cooled by the first solution, so that efficiency is improved when electricity is generated by using solar light.

The first solution of which the temperature is increased as described above passes through the first inflow member 1260 and is introduced to the first flow channel 1241.

When the first solution is introduced to the first flow channel 1241, the second solution is introduced to the second flow channel 1242 through the second solution inlet port 1212.

The first and second solutions introduced as described above may flow through the first and second flow channels 1241 and 1242, and electricity may be generated by a salt concentration difference between the first and second solutions.

That is, as the cationic material and the anionic material included in the second solution having a higher salt concentration than that of the first solution selectively move the cation exchange membrane C and the anion exchange membrane A, a potential difference occurs, thereby generating electricity.

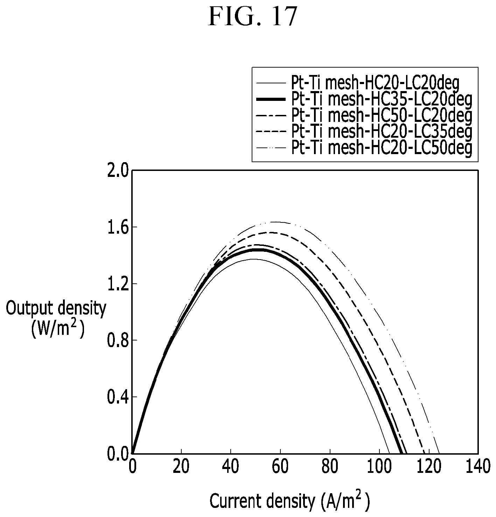

Referring to FIG. 17, a movement speed of the ionic material of the second solution is increased by introducing the first solution of which the temperature is increased as described above to the first flow channel 1241, so that power output is improved. In the experiment, each of an NaCl salt simulated solution equivalent to 3.5 wt% of sea water and an NaCl salt simulated solution equivalent to 0.005 wt% of freshwater were supplied in the amount of 100 cc/min as a high-concentration solution and a low-concentration solution. The used separation membrane is the KIER separation membrane manufactured by the Korea Institute of Energy Research. The result showed that the increase in an output density due to an increase in a temperature on the low-concentration solution side was greater than the increase in an output density due to an increase in a temperature on the high-concentration solution side. This shows that when the high-concentration solution or the low-concentration solution supplied for the salinity gradient power generation is applied to cooling the solar panel in order to overcome the decrease in performance according to the increase in the temperature of the solar panel when the salinity gradient power generation complexly generates power with the solar panel, it is more advantageous to utilize the low-concentration solution than the high-concentration solution (in terms of the improvement of the output). Further, even considering stability of the solar panel (in terms of stability for corrosion by salt and the like), it is determined that it is advantageous to promote to improve both the performance by cooling the solar panel by using the low-concentration solution rather than the high-concentration solution and the performance by increasing the temperature of the salt gradient power generation source. Referring to FIG. 17, when power is generated as described above, power generation output may be increased by about 20% or more compared to the general reverse electrodialysis power generator.

As illustrated in FIG. 17, when a first solution having a temperature of 20°C was introduced to the first flow channel 1241, a maximum power density was measured at 1.4 (W/m²) per unit area of the ion exchange membrane, but when the first solution having a temperature of 50°C was introduced by increasing the temperature like the present invention, a maximum power density was measured at 1.7 (W/m²) per unit area of the ion exchange membrane. That is, it could be seen that the power density is increased as described above.

After the electricity is generated as described above, the first and second solutions may be discharged to the outlet ports 1211 and 1213, respectively.

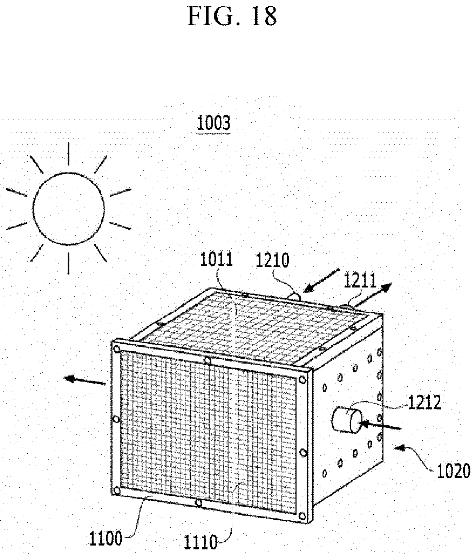

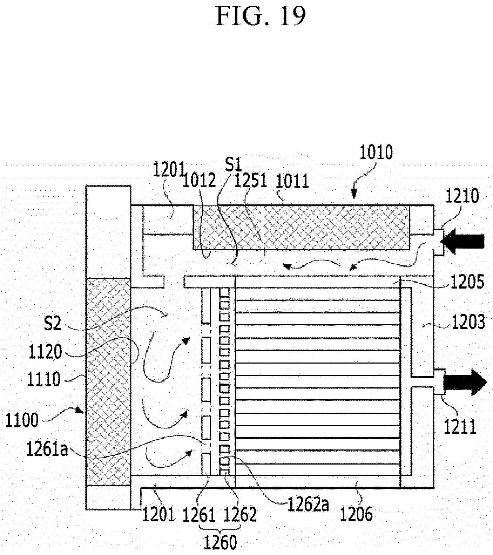

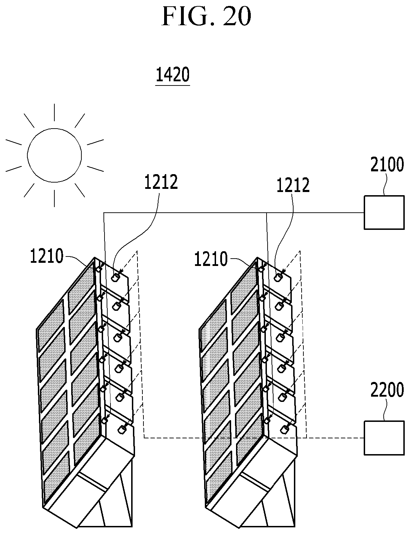

FIGS. 18 and 19 are a perspective view and a lateral view of a third exemplary embodiment 1003 of the salinity gradient solar energy complex power generator, and FIGS. 20 to 22 are perspective views for describing the third exemplary embodiment 1003 of the salinity gradient solar energy complex power generator.

The third exemplary embodiment 1003 of the salinity gradient solar energy complex power generator additionally includes one solar cell panel in addition to the salinity gradient solar energy complex power generators 1001 and 1002 according to the first and second exemplary embodiments.

Accordingly, the descriptions of the same constituent elements as those of the salinity gradient solar energy complex power generators 1001 and 1002 described above and the operations thereof will be omitted.

First, referring to FIG. 18, the third exemplary embodiment 1003 of the salinity gradient solar energy complex power generator includes a first solar cell panel 1010 having a first surface 1011 including a first light receiving unit and a second surface 1012 in a direction opposite to the first surface.

In addition to this, the third exemplary embodiment 1003 of the salinity gradient solar energy complex power generator includes a second solar cell panel 1100 having a first surface 1110 including a second light receiving unit and a second surface 1120 in a direction opposite to the first surface.

Further, the third exemplary embodiment 1003 of the salinity gradient solar energy complex power generator includes the salinity gradient power generating unit 1020 to which the first solution and the second solution are introduced to generate electricity through the salinity gradient power generation.

More particularly, the salinity gradient power generating unit 1020 includes a housing 1200 including a first solution inlet port 1210, a first solution outlet port 1211, a second solution inlet port 1212, and a second solution outlet port 1213.

Further, the salinity gradient power generating unit 1020 includes an anode electrode 1220 and a cathode electrode 1230, which are disposed in the housing 1200 and spaced apart from each other at a predetermined interval, and includes a plurality of ion exchange membranes 1240 arranged to divide the first flow channel 1241 in which the first solution flows and the second flow channel 1242 in which the second solution flows between the anode and cathode electrodes 1220 and 1230.

Herein, the plurality of ion exchange membranes 1240 includes cation exchange membranes C and anion exchange membranes A.

Further, the housing 1200 may include the first solution inlet 1250 which connects the first solution inlet port 1210 and the first flow channel 1241 so that a fluid is movable.

Particularly, the first solution inlet 1250 may be provided so that heat exchange is performed between the first solution and the second surface 1012 of the first solar cell panel 1010 and heat exchange is sequentially performed between the first solution and the second surface 1120 of the second solar cell panel 1100 in a flow direction of the first solution.

Herein, the first solution inlet 1250 includes a first inlet 1251 connected with the first solution inlet port 1210 and a second inlet 1252 connecting the first inlet 1251 and the first flow channel 1241.

That is, when the first solution is introduced to the first inlet 1251, the first solution may be in contact with the second surface of the first solar cell panel and then be introduced to the second inlet 1252 in the flow direction of the first solution and be in contact with the second surface 1120 of the second solar cell panel 1100.

Herein, according to the flow direction of the first solution, the first solution may flow in a longitudinal direction of the first inlet and then be introduced to the second inlet 1252 and flow.

The second inlet may include an inlet port 1253 to which the first solution flowing in the first inlet is introduced.

Accordingly, the first solution may be introduced to the first inlet and then be introduced to the second inlet 1252 through the inlet port 1253.

Further, the first and second solar cell panels may additionally include the radiating members 1013 in at least partial regions of the second surfaces 1012 and 1120, respectively.

In addition to this, the salinity gradient power generating unit 1020 additionally includes the first inflow member 1260 which is disposed in the second inlet 1252 and is provided so as to distribute the first solution to the first flow channel and simultaneously prevent the first solution from being introduced to the second flow channel.

Further, electricity may be generated while an ionic material included in the second solution selectively moves the plurality of ion exchange membranes by the salinity gradient between the first solution and the second solution flowing through the first flow channel 1241 and the second flow channel 1242.

In the meantime, the temperature of the first solution may be increased by the second surfaces 1012 and 1120 of the first and second solar cell panels in the first and second inlets 1251 and 1252.

More particularly, in the first inlet 1251, at least one surface forming a space S1, to which the first solution is introduced, may be the second surface 1012 of the first solar cell panel.

Further, in the second inlet 1252, at least one surface forming a space S2, to which the first solution is introduced, may be the second surface 1120 of the second solar cell panel.

Accordingly, the first solution introduced to the first solution inlet port 1210 is in contact with the second surface 1012 of the first solar cell panel that is at least one surface of the first inlet 1251, so that the temperature of the first solution may be increased.

The first solution of which the temperature is increased as described above is introduced to the second inlet 1252 through the inlet port 1253 and is in contact with the second surface 1120 of the second solar cell panel that is at least one surface of the second inlet 1252 to increase the temperature one more time.

The first solution of which the temperature is increased as described above is introduced to the first flow channel as described above, so that the salinity gradient power generation may be more efficiently performed.

In this case, each of the first and second solar cell panels 1010 and 1100 cooled by the introduced first solution may improve electricity generation efficiency by the cooling effect.

A process of generating electricity by using the third exemplary embodiment 1003 of the salinity gradient solar energy complex power generator configured as described above will be described below with reference to FIG. 19.

First, when solar light is incident to the first surface 1011 including the light receiving unit of the solar cell panel 1010, electricity is generated by the incident solar light.

In this case, electricity is generated and a temperature of the first surface 1011 is increased by the solar light incident to the first surface 1011 at the same time, and a temperature of the second surface 1012 is increased by conduction.

The first solution introduced to the first inlet 1251 through the first solution inlet port 1210 is in contact with the second surface 1012 of the first solar cell panel of which the temperature is increased as described above, and the temperature of the first solution which is in contact with the second surface 1012 is increased and the temperature of the second surface 1012 is decreased at the same time.

That is, the first solar cell panel 10 is cooled by the first solution, so that efficiency is improved when electricity is generated by using solar light.

The first solution of which the temperature is increase as described above is introduced to the second inlet 1252 through the inlet port 1253.

Simultaneously, when solar light is incident to the first surface 1110 including the light receiving unit of the solar cell panel 1100, electricity is generated by the incident solar light, and the temperature of the first surface 1110 is increased by solar light incident to the first surface 1110 at the same time as electricity is generated, and the temperature of the second surface 1120 is increased by conduction according to the increase in the temperature.

The first solution introduced to the second inlet 1252 is in contact with the second surface 1120 of the second solar cell panel of which the temperature is increased as described above, and the temperature of the first solution which is in contact with the second surface 1120 is further increased and the temperature of the second surface 1120 is decreased at the same time.

That is, the second solar cell panel 1100 is cooled by the first solution, so that efficiency is improved when electricity is generated by using solar light.

The first solution of which the temperature is increased as described above passes through the first inflow member 1260 and is introduced to the first flow channel 1241.

When the first solution is introduced to the first flow channel, the second solution is introduced to the second flow channel 1242 through the second solution inlet port 1212.

The first and second solutions introduced as described above may flow through the first and second flow channels 1241 and 1242, and electricity may be generated by a salinity gradient difference between the first and second solutions.

That is, the cationic material and the anionic material of the second solution having a higher salt concentration than that of the first solution selectively move the cation exchange membrane C and the anion exchange membrane A, so that a potential difference is generated to generate electricity.

Particularly, a movement speed of the ionic material of the second solution is increased by introducing the first solution of which the temperature is increased as described above to the first flow channel 1241, so that power generation efficiency is improved.

After the electricity is generated as described above, the first and second solutions may be discharged to the outlet ports 1211 and 1213, respectively.

Further, the present invention provides the salinity gradient solar energy complex power generating system 420.

For example, the salinity gradient solar energy complex power generating system relates to the system using the salinity gradient solar energy complex power generator.

Accordingly, the contents described in the salinity gradient solar energy complex power generators 1001, 1002, and 1003 may be identically applied to the particular matters of the salinity gradient solar energy complex power generator which is to be described below.

Referring to FIGS. 20 to 22, the salinity gradient solar energy complex power generating system 420 includes the plurality of connected salinity gradient solar energy complex power generators 1001, 1002, or 1003.

Further, the salinity gradient solar energy complex power generating system 420 includes the first solution supply source 2100 provided to as to supply the first solution to the first solution inlet port of each of the salinity gradient solar energy complex power generators.

Further, the salinity gradient solar energy complex power generating system 420 includes the second solution supply source 2200 provided to as to supply the second solution to the second solution inlet port of each of the salinity gradient solar energy complex power generators.

By using the system configured as described above, it is possible to more efficiently generate power, thereby improving power yield.

Table 1 below is the table representing the calculated output improvement rate of the complex power generating system according to a change in a temperature in the salinity gradient solar energy complex power generator described with reference to FIG. 17.

**(Table 1)**

| | | | |
|---|---|---|---|
| Solar panel | | Panel size | 100X120X10 cm³ |
| | | Initial panel temperature/output (Wh) | 30°C |
| | | | 180 |
| | | Panel temperature/output (Wh) after cooling (Wh) | 20°C |
| | | | 190.8 |
| | | Output improvement (%) | 6% |
| | | Cooling efficiency (based on water) | 70% |
| Salinity gradient power generation | High-concentrati on solution (3.5wt%) | Initial temperature (salinity gradient introduction temperature) | 20°C |
| | | Outlet temperature | 20-25°C |
| | | Flow rate | 12L/min |
| | Low-concentrati on solution (0.005wt.%) | Initial temperature | 20°C |
| | | Temperature after passing through solar panel (Salinity gradient introduction temperature) | 35°C |
| | | Outlet temperature | 25-30°C |
| | | Flow rate | 12L/min |
| | Stack | Size | 100X100X20 cm³ |
| | | Separation membrane | KIER 250 cell |
| | | Electrode | Pt-Ti mesh |
| | | Output at 20°C (Wh) | 350 |
| | | Output at 50°C (Wh) | 425 |
| | | Output improvement (%) | 21.4% |

As represented in Table 1, when the temperature of the low-concentration solution side is increased from 20°C to 50°C, the output density of the salinity gradient power generation is increased from 1.4 to 1.7 W/m². When this is applied to the salinity gradient power generation stack 100 × 100 ×20 cm³ (W ×L ×h) (about 250 cell pairs of KIER separation membrane), the output quantity is calculated to be increased from about 350 to 425 Wh, which is increased by about 21.4%. When the salinity gradient solar energy complex power generator is configured based on the foregoing as illustrated in FIG. 14, it is possible to configure a solar cell panel of about 100 × 120 × 10 cm³ (W ×L × h), and when it is assumed that cooling efficiency is about 70% and a temperature of the solar cell panel is cooled from 30°C to 20°C, the output quantity is increased from 180 to about 191 Wh, which is improved by about 6%. Through the present exemplary embodiment, it is shown that when the supply source of the salinity gradient power generation is utilized as cooling water of the solar cell panel, performance of both the salinity gradient power generation and the solar cell power generation are improved. Accordingly, it can be seen that it is possible to optimize the control of the power generation quantity and a performance improvement rate of the complex power generator through the engineering design of the complex power generating structure with the solar cell panel through controlling a size, a supply quantity, and the like of the salinity gradient power generating stack.

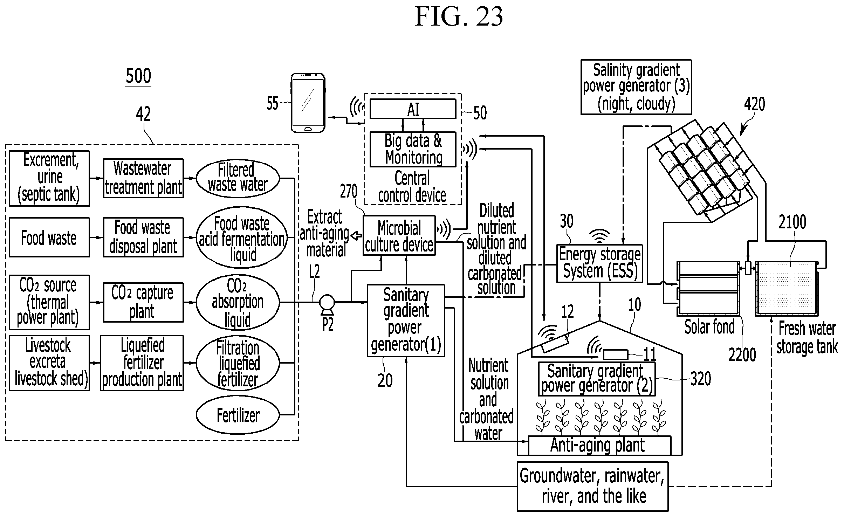

FIG. 23 is a diagram illustrating a combined system in which the smart farm systems according to the first to fourth exemplary embodiments of the present invention are combined

A smart farm combined management system 500 according to the present invention may include the salinity gradient power generator 20 according to the first and second exemplary embodiments, the salinity gradient power generator 320 according to the third exemplary embodiment, and the third salinity gradient power generator 420 according to the fourth exemplary embodiment. The salinity gradient power generators 20, 320, and 420 may be used as distributed power sources, have little load variation, and supply the generated electricity to the sensors 11, 211, and 311, the electromechanical device 12, the central control device 50, and the like, to realize energy independence.

Further, the information collected through the sensors 11, 21, and 311 is transferred to the central control device 50, and the central control device 50 analyzes big data of the growth environment based on artificial intelligence, and controls the growth of crops or microorganisms based on the analyzed big data. Accordingly, it is possible to integrally operate and manage the smart farm and implement a high value-added smart farm.

Further, the salinity gradient power generator 20 uses, as the raw material, waste resources, such as filtered wastewater obtained from a septic tank around the farm facility 10, food waste acid fermentation liquid obtained from a food waste disposal plant, carbon dioxide absorption liquid obtained from a carbon dioxide capture plant that absorbs carbon dioxide discharged from combusted exhaust gas of a combustion exhaust facility, and a filtration liquefied fertilizer obtained from excreta of a shed, or fertilizer easily available in the surroundings, instead of sea water, and uses fresh water obtained from groundwater, tap water, sewage effluent, river water, reservoirs, and other agricultural water, thereby simultaneously solving environment and energy problems.

Table 2 below represents osmotic pressure based on each concentration according to the type of fertilizer solution.

**[Table 2]**

| | 1M | 2M | 3M | 4M | 5M |
|---|---|---|---|---|---|
| NH₄NO₃ | 37 | 60 | 98 | 125 | 160 |
| NH₄Cl | 44 | 90 | 140 | 180 | 235 |
| Ca(NO₃)₂ | 50 | 110 | 170 | 240 | 320 |
| NH₄H₂PO₄ | 40 | 90 | 130 | 160 | 170 |
| NaNO₃ | 43 | 75 | 119 | 154 | 196 |
| KNO₃ | 40 | 60 | 80 | 100 | 105 |
| (NH₄)₂SO₄ | 50 | 100 | 150 | 200 | 230 |
| KH₂PO₄ | 40 | 60 | 58 | 55 | 51 |
| (NH₄)₂HPO₄ | 20 | 50 | 65 | 83 | 102 |
| K₂SO₄ | 30 | 29 | 28 | 27 | 26 |
| KCl | 50 | 80 | 130 | 180 | 230 |

In the case of KH₂PO₄ solution, as the concentration increases, the osmotic pressure tends to rise and then decrease, and in the case of K₂SO₄ solution, as the concentration increases, the osmotic pressure tends to decrease. In the case of the remaining fertilizer solution except for KH₂PO₄ solution and K₂SO₄ solution, as the concentration increases, the osmotic pressure tends to increase.

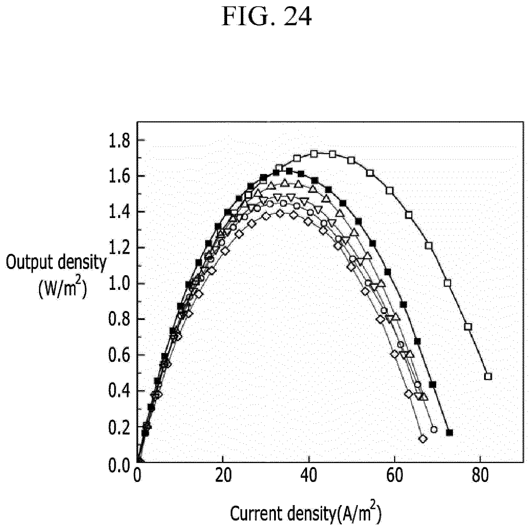

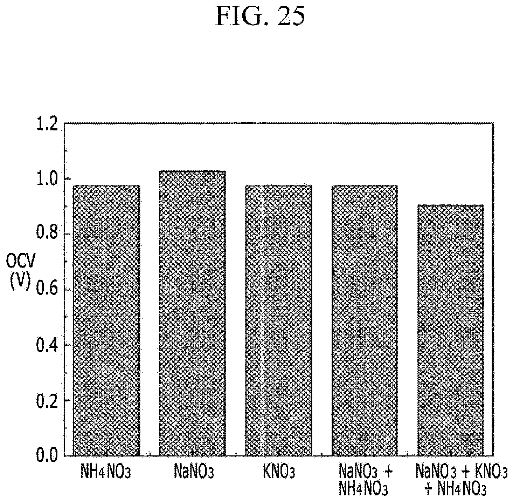

FIGS. 24 and 25 are the graphs representing the energy density and Open Circuit Voltage (OCV) of the salinity gradient power generator according to the type and the configuration of a fertilizer component used as the high-concentration solution 42 in the smart farm system illustrated in FIG. 1, respectively.

A concentration of the fertilizer solution used in the experiment was 0.5 M, and a flow rate of each of the fertilizer and fresh water injected to the salinity gradient power generator was 30 cc/min. The KNO₃ fertilizer solution shows the highest output density, and the NaNO₃ fertilizer shows the highest OCV. In all of the six fertilizers, the output densities are 1.3 W/m² or more, and the OCVs are 0.9 V or more.

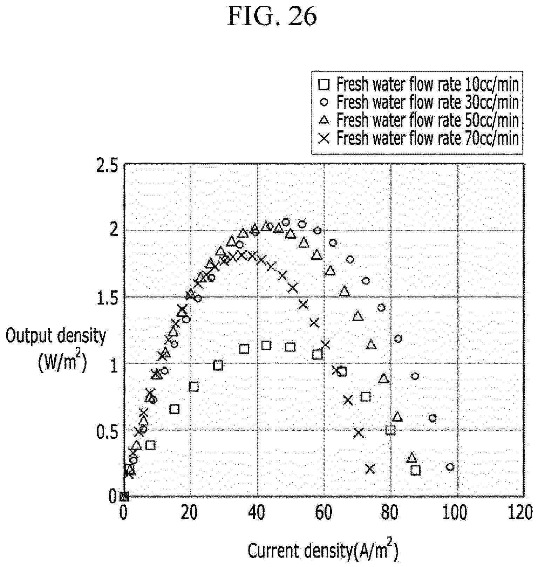

FIG. 26 is a graph illustrating an energy density according to a change in a freshwater flow rate of the salinity gradient power generator using the chemical fertilizer components in the smart farm system illustrated in FIG. 1.

The fertilizer solution used in the experiment was a KNO₃ solution of 1 M, and a flow rate of fertilizer injected to the salinity gradient power generator was 30 cc/min. The energy density was measured while changing the flow rate of fresh water injected to the salinity gradient power generator to 10 cc/min, 30 cc/min, 50 cc/min, and 70 cc/min. As a result, when the supply rates of the fertilizer solution and fresh water are identically 30 cc/min, the output density exceeds 2 W/m² which is the highest.

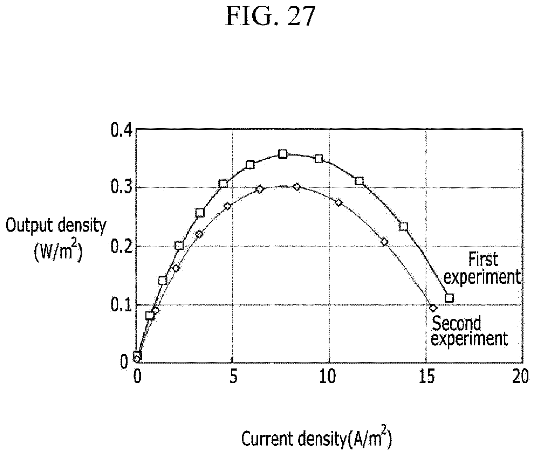

FIG. 27 is a graph illustrating an energy density of the salinity gradient power generator using a waste coffee solution as a fertilizer solution and using freshwater as fresh water in the smart farm system illustrated in FIG. 1.

The fertilizer solution used in the experiment was the fertilizer solution extracted from coffee waste, and had electric conductivity of about 3 mS/cm. The fresh water used in the experiment was general freshwater, and had electric conductivity of about 0.0053 mS/cm. Both the flow rates of the fertilizer solution and the fresh water injected to the salinity gradient power generator were 30 cc/min. As a result, the salinity gradient power generator exhibits the output density exceeding 0.3 W/m².

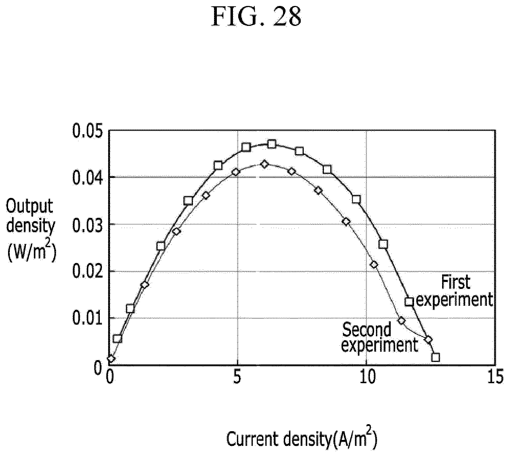

FIG. 28 is a graph illustrating an energy density of the salinity gradient power generator using KNO₃ as a fertilizer solution and using a waste coffee solution as fresh water in the smart farm system illustrated in FIG. 1.

The fertilizer solution used in the experiment was the KNO₃ solution of 0.5 M, and had electric conductivity of about 55 mS/cm. The fresh water used in the experiment was the solution extracted from coffee waste, and had electric conductivity of about 3 mS/cm. Both the flow rates of the fertilizer solution and the fresh water injected to the salinity gradient power generator were 30 cc/min. As a result, the salinity gradient power generator exhibits the output density exceeding 0.04 W/m².

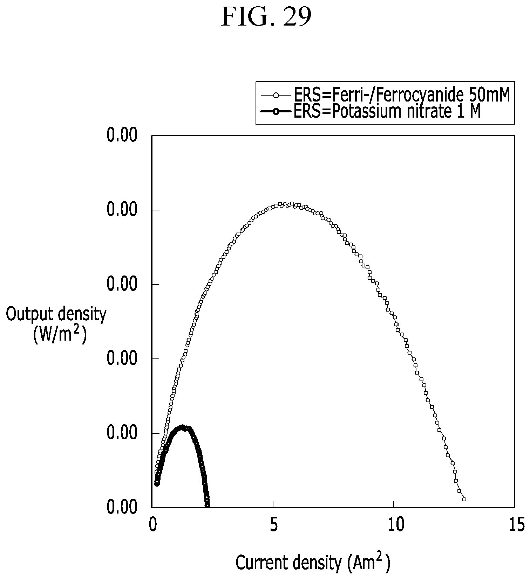

FIG. 29 is a graph illustrating an energy density of the salinity gradient power generator using a liquefied fertilizer obtained from pig excreta as a fertilizer solution and using freshwater as fresh water in the smart farm system illustrated in FIG. 1 or 6.

The liquefied fertilizer solution used in the experiment had electric conductivity of about 6 mS/cm. Both the flow rates of the liquefied fertilizer solution and the fresh water injected to the salinity gradient power generator were 10 cc/min. As the result of the experiment, when an electrolyte of the electrode is ferri-/ferrocyanide, the salinity gradient power generator exhibits the output density of about 0.2W/m², and even when potassium nitrate that is the kind of fertilizer is used as the electrolyte of the electrode, the salinity gradient power generator exhibits the output density of about 0.05W/m².

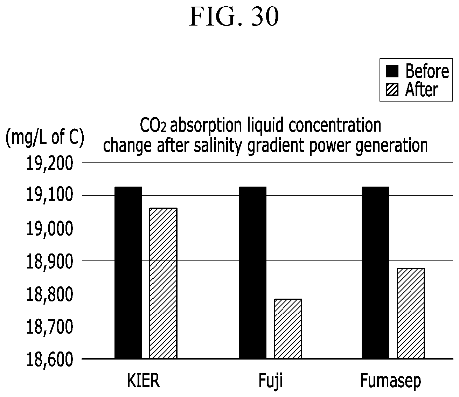

FIG. 30 is a graph illustrating a change in a concentration of carbon dioxide absorption liquid of the salinity gradient power generator using carbon dioxide absorption liquid as a fertilizer solution and using freshwater as fresh water in the smart farm system illustrated in FIG. 1.

The separation membranes used in the experiment were the KIER separation membrane autonomously manufactured by the Korea Institute of Energy Research, the separation membrane from the Fujifilm company, and the separation membrane from the Fumasep Company in 5 cell pairs. Both the flow rates of the high-concentration solution (the carbon dioxide absorption liquid) and the low-concentration solution (freshwater) were 15 cc/min. As the result, the concentration of the carbon dioxide absorption liquid of the high-concentration solution side was decreased after the salinity gradient power generation, and the decrease width is highest in the separation membrane of the Fujifilm company. In the case of the KIER separation membrane of which the decrease width is smallest, the generated output density was about 0.02 W/m².

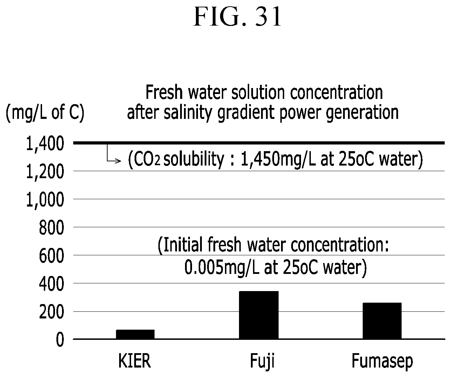

FIG. 31 is a graph illustrating a change in a concentration of fresh water solution of the salinity gradient power generator using carbon dioxide absorption liquid as a fertilizer solution and using freshwater as fresh water in the smart farm system illustrated in FIG. 1.

FIG. 31 shows an increase rate of carbon dioxide of the fresh water side that is the low-concentration solution in the experimental condition. A concentration increase width in the separation membrane of the Fujifilm company, of which the concentration increase rate was the highest, was found to be about 30% compared to solubility of carbon dioxide dissolvable in freshwater.

While this invention has been described in connection with what is presently considered to be practical exemplary embodiments, it is to be understood that the invention is not limited to the disclosed embodiments.

### [Industrial Applicability]

A smart farm system may be applied to a smart farm franchise business, an eco-friendly city, an anti-aging functionalized city, a large-scale eco-friendly water-energy-waste independent smart city, a large-scale eco-friendly water-energy-food independent smart city, and the like.

## Claims

1. An energy-independent smart farm system, comprising:
a farm facility (10) in which crops are cultivated;
a salinity gradient power generator (20) which is configured to receive a high-concentration solution including at least one selected from the group consisting of filtered waste water, food waste acid fermentation liquid, carbon dioxide absorption liquid, filtration liquefied fertilizer, and fertilizer liquid and a low-concentration solution having a lower concentration than a concentration of the high-concentration solution and to generate electricity by using a concentration difference between the high-concentration solution and the low-concentration solution, and to supply a growth raw material used in growing the crops;
wherein the salinity gradient power generator (20) is a Reverse Electro Dialysis, RED, device;
a large-capacity salinity gradient power generator (420) which is configured to receive any one of high-concentration salt water and the high-concentration solution and the low-concentration solution and to generate electricity; and
an energy storage system (30) which is configured to store electricity generated in the salinity gradient power generator and the large-capacity salinity gradient power generator, and to supply the electricity to the farm facility,
wherein the large-capacity salinity gradient power generator (420) comprises:
a solar cell panel (1010) having a first surface (1011) including a light receiving unit and a second surface (1012) in a direction opposite to the first surface (1011); and
a salinity gradient power generating unit (1020) to which a first solution formed of the low-concentration solution and a second solution formed of any one of the high-concentration salt water and the high-concentration solution are introduced to generate electricity through salinity gradient power generation, and
the salinity gradient power generating unit (1020) includes: a housing (1200) including a first solution inlet port (1210), a first solution outlet port (1211), a second solution inlet port (1212), and a second solution outlet port (1213);
an anode electrode (1220) and a cathode electrode (1230) which are disposed in the housing (1200) and are provided to be separated from each other at a predetermined interval; and
a plurality of ion exchange membranes (1240) arranged to divide a first flow channel (1241) in which a first solution flows and a second flow channel (1242) in which a second solution flows between the anode electrode (1220) and the cathode electrode (1230), and
the housing (1200) includes a first solution inlet (1250) which connects the first solution inlet port (1210) and the first flow channel (1241) so that a fluid is movable, and
the first solution inlet (1250) is provided so that heat is exchanged between the introduced first solution and the second surface (1012) of the solar cell panel (1010), and
wherein the first solution introduced to the first solution inlet (1250) through the first solution inlet port (1210) being in contact with the second surface (1012) of the solar cell panel (1010), cools the solar cell panel (1010) of which the temperature is increased, and thus the temperature of the introduced first solution is increased by the second surface (1012) of the solar cell panel (1010), and
the first solution having a higher temperature than the temperature of the initially introduced first solution is introduced to the first flow channel (1241) of the salinity gradient power generating unit (1020).

2. The energy-independent smart farm system according to claim 1, further comprising:
a microbial culture device,
wherein a part of the growth raw material generated in the salinity gradient power generator is supplied to the microbial culture device.

3. The energy-independent smart farm system according to claim 2, wherein:
the high-concentration solution is a carbon dioxide absorption liquid, and
the growth raw material supplied to the microbial culture device (270) is carbonated water.

4. The energy-independent smart farm system according to claim 1, wherein:
the second solution is a solution supplied from a bottom layer of a solar pond.

## Patentansprüche

1. Energieunabhängiges intelligentes Landwirtschaftssystem, umfassend:
eine landwirtschaftliche Anlage (10), in der Nutzpflanzen angebaut werden;
einen Salzgradienten-Stromgenerator (20), der konfiguriert ist, um eine hochkonzentrierte Lösung, die mindestens eines einschließt aus der Gruppe bestehend aus gefiltertem Abwasser, Lebensmittelabfall-Säurefermentationsflüssigkeit, Kohlendioxidabsorptionsflüssigkeit, filtriertem verflüssigtem Dünger und Düngerflüssigkeit, sowie eine niedrigkonzentrierte Lösung mit einer geringeren Konzentration als die der hochkonzentrierten Lösung aufzunehmen und unter Verwendung eines Konzentrationsunterschieds zwischen der hochkonzentrierten und der niedrigkonzentrierten Lösung Strom zu erzeugen und ein Wachstumsrohmaterial für den Anbau der Nutzpflanzen zuzuführen;
wobei der Salzgradienten-Stromgenerator (20) eine Vorrichtung zur Umkehrosmose-Elektrodialyse (Reverse Electro Dialysis - RED) ist;
einen großvolumigen Salzgradienten-Stromgenerator (420), der konfiguriert ist, um eines von hochkonzentriertem Salzwasser und der hochkonzentrierten Lösung und der niedrigkonzentrierten Lösung aufzunehmen und Strom zu erzeugen; und
ein Energiespeichersystem (30), das konfiguriert ist, um den im Salzgradienten-Stromgenerator und im großvolumigen Salzgradienten-Stromgenerator erzeugten Strom zu speichern und der landwirtschaftlichen Anlage Strom zuzuführen.
wobei der großvolumige Salzgradienten-Stromgenerator (420) umfasst:
ein Solarzellenpanel (1010) mit einer ersten Oberfläche (1011), die eine Lichtempfangseinheit einschließt, und einer zweiten Oberfläche (1012) in der der ersten Oberfläche (1011) entgegengesetzten Richtung; und
eine Salzgradienten-Stromerzeugungseinheit (1020), in die eine erste Lösung, die aus niedrigkonzentrierter Lösung gebildet ist, und eine zweite Lösung, die aus einem des hochkonzentrierten Salzwassers und der hochkonzentrierten Lösung gebildet ist, eingeführt werden, um durch Salzgradienten-Stromerzeugung Strom zu erzeugen, und
die Salzgradienten-Stromerzeugungseinheit (1020) einschließt: ein Gehäuse (1200) mit einem ersten Lösungseinlassanschluss (1210), einem ersten Lösungsauslassanschluss (1211), einem zweiten Lösungseinlassanschluss (1212) und einem zweiten Lösungsauslassanschluss (1213);
eine Anodenelektrode (1220) und eine Kathodenelektrode (1230), die im Gehäuse (1200) angeordnet sind und in einem vorbestimmten Abstand voneinander getrennt bereitgestellt sind; und
eine Vielzahl von Ionenaustauschermembranen (1240), die so angeordnet sind, dass sie einen ersten Strömungskanal (1241), in dem eine erste Lösung fließt, und einen zweiten Strömungskanal (1242), in dem eine zweite Lösung zwischen der Anodenelektrode (1220) und der Kathodenelektrode (1230) fließen, unterteilen, und
das Gehäuse (1200) einen ersten Lösungseinlass (1250) einschließt, der den ersten Lösungseinlassanschluss (1210) und den ersten Strömungskanal (1241) so verbindet, dass ein Fluid beweglich ist, und
der erste Lösungseinlass (1250) so bereitgestellt ist, dass ein Wärmeaustausch zwischen der zugeführten ersten Lösung und der zweiten Oberfläche (1012) des Solarzellenpanels (1010) stattfindet, und
wobei die erste Lösung, die durch den ersten Lösungseinlassanschluss (1210) in den ersten Lösungseinlass (1250) eingeführt wird und mit der zweiten Oberfläche (1012) des Solarzellenpanels (1010) in Kontakt steht, das Solarzellenpanel (1010) kühlt, dessen Temperatur dadurch ansteigt, und somit die Temperatur der eingeleiteten ersten Lösung durch die zweite Oberfläche (1012) des Solarzellenpanels (1010) erhöht wird, und
die erste Lösung, die eine höhere Temperatur als die Temperatur der anfänglich zugeführten ersten Lösung aufweist, in den ersten Strömungskanal (1241) der Salzgradienten-Stromerzeugungseinheit (1020) eingeführt wird.

2. Energieunabhängiges intelligentes Landwirtschaftssystem nach Anspruch 1,
ferner umfassend:
eine Mikrobenkulturvorrichtung,
wobei ein Teil des im Salzgradienten-Stromgenerator erzeugten Wachstumsrohmaterials der Mikrobenkulturvorrichtung zugeführt wird.

3. Energieunabhängiges intelligentes Landwirtschaftssystem nach Anspruch 2,
wobei:
die hochkonzentrierte Lösung eine Kohlendioxid-Absorptionsflüssigkeit ist, und
das Wachstumsrohmaterial, das der Mikrobenkulturvorrichtung (270) zugeführt wird, kohlensäurehaltiges Wasser ist.

4. Energieunabhängiges intelligentes Landwirtschaftssystem nach Anspruch 1,
wobei:
die zweite Lösung eine Lösung ist, die aus einer unteren Schicht eines Solarteichs zugeführt wird.

## Revendications

1. Système agricole intelligent indépendant sur le plan énergétique, comprenant :
une installation agricole (10) dans laquelle sont cultivées des cultures ;
un générateur d'énergie à gradient de salinité (20) qui est configuré pour recevoir une solution à haute concentration comprenant au moins un élément choisi parmi le groupe constitué d'eaux usées filtrées, de liquide de fermentation acide de déchets alimentaires, de liquide d'absorption de dioxyde de carbone, d'engrais liquéfié par filtration et d'engrais liquide, et une solution à faible concentration ayant une concentration inférieure à celle de la solution à haute concentration, et pour produire de l'électricité en utilisant la différence de concentration entre la solution à haute concentration et la solution à faible concentration, et pour fournir une matière première de croissance utilisée dans la culture des plantes ;
dans lequel le générateur d'énergie à gradient de salinité (20) est un dispositif d'électrodialyse inverse, appelé RED ;
un générateur d'électricité à gradient de salinité de grande capacité (420) qui est configuré pour recevoir l'eau salée à haute concentration et la solution à haute concentration et la solution à faible concentration, et pour produire de l'électricité ; et
un système de stockage d'énergie (30) qui est configuré pour stocker l'électricité produite dans le générateur d'énergie à gradient de salinité et le générateur d'énergie à gradient de salinité de grande capacité, et pour fournir l'électricité à l'installation agricole,
dans lequel le générateur d'énergie à gradient de salinité de grande capacité (420) comprend :
un panneau de cellules solaires (1010) ayant une première surface (1011) comprenant une unité de réception de lumière et une deuxième surface (1012) orientée dans une direction opposée à la première surface (1011) ; et
une unité de production d'électricité par gradient de salinité (1020) dans laquelle une première solution formée de la solution à faible concentration et une deuxième solution formée de l'une quelconque de l'eau salée à haute concentration et de la solution à haute concentration sont introduites pour produire de l'électricité grâce à la production d'électricité par gradient de salinité, et
l'unité de production d'électricité par gradient de salinité (1020) comprend : un boîtier (1200) comprenant un premier orifice d'entrée de solution (1210), un premier orifice de sortie de solution (1211), un deuxième orifice d'entrée de solution (1212) et un deuxième orifice de sortie de solution (1213) ;
une électrode anodique (1220) et une électrode cathodique (1230) qui sont disposées dans le boîtier (1200) et sont prévues pour être séparées l'une de l'autre à un intervalle prédéterminé ; et
une pluralité de membranes d'échange d'ions (1240) agencées pour diviser un premier canal d'écoulement (1241) dans lequel s'écoule une première solution et un deuxième canal d'écoulement (1242) dans lequel s'écoule une deuxième solution entre l'électrode anodique (1220) et l'électrode cathodique (1230), et le boîtier (1200) comprend un premier orifice d'entrée de solution (1250) qui relie l'orifice d'entrée de première solution (1210) et le premier canal d'écoulement (1241) de manière à permettre le déplacement d'un fluide, et
l'entrée de première solution (1250) est prévue de manière à permettre un échange de chaleur entre la première solution introduite et la deuxième surface (1012) du panneau de cellules solaires (1010), et
dans lequel la première solution introduite dans la première entrée de solution (1250) par l'intermédiaire du premier orifice d'entrée de solution (1210) en contact avec la deuxième surface (1012) du panneau de cellules solaires (1010) refroidit le panneau de cellules solaires (1010) dont la température est augmentée, et ainsi la température de la première solution introduite est augmentée par la deuxième surface (1012) du panneau de cellules solaires (1010), et
la première solution ayant une température supérieure à la température de la première solution initialement introduite est introduite dans le premier canal d'écoulement (1241) de l'unité de production d'énergie par gradient de salinité (1020).

2. Système agricole intelligent indépendant sur le plan énergétique selon la revendication 1, comprenant en outre :
un dispositif de culture microbienne,
dans lequel une partie de la matière première de croissance générée dans le générateur d'énergie à gradient de salinité est fournie au dispositif de culture microbienne.

3. Système agricole intelligent indépendant en énergie selon la revendication 2, dans lequel :
la solution à haute concentration est un liquide absorbant le dioxyde de carbone, et
la matière première de croissance fournie au dispositif de culture microbienne (270) est de l'eau gazéifiée.

4. Système agricole intelligent indépendant en énergie selon la revendication 1, dans lequel :
la deuxième solution est une solution fournie à partir d'une couche inférieure d'un étang solaire.
